# EUROPEAN PATENT APPLICATION

(11) **EP 1 395 054 A1**
(43) Date of publication of application: **03.03.2004**
(21) Application number: 02726512.3
(22) Date of filing: 28.05.2002
(51) Int. Cl.: H04N 5/761, H04H 1/00, G11B 20/10, G11B 27/00, G11B 31/00

(54) **PROGRAM RECORDING SYSTEM, REMOTE CONTROL APPARATUS, METHOD, AND PROGRAM**

(30) Priority: 29.05.2001 JP 2001160284; 07.06.2001 JP 2001172606
(71) Applicant: MATSUSHITA ELECTRIC INDUSTRIAL CO., LTD., Kadoma-shi, Osaka 571-0050 (JP)
(72) Inventor: HIRAMOTO, Tetsuya, Toyota-gun, Hiroshima 729-2502 (JP); HORI, Ryuichi, Hiroshima-shi, Hiroshima 732-0027 (JP); OKAMOTO, Shuji, Kure-shi, Hiroshima 737-0814 (JP); ASADA, Yasuhiro, Hiroshima-shi, Hiroshima 733-0011 (JP)
(74) Representative: Dempster, Benjamin John Naftel
(86) International application number: PCT/JP2002/005172
(87) International publication number: WO 2002/098131

(57) **Abstract**

Because of limitations of a display area allocated on a mobile telephone or a remote controller, even if a program table is displayed according to the EPG information, the browsability of programs is mostly insufficient, and it is likely for a user to miss the program. In a case where a user updates recording reservation information of a program reserved for recording by using a mobile telephone of the present invention, the mobile telephone acquires the recording reservation information and information of broadcasting schedule, and displays point of difference between the recording reservation information and the information of the broadcasting schedule. Consequently, the user can easily and surely find the change of the broadcasting schedule, and match contents of update with the change.

## Description

### TECHNICAL FIELD

The present invention relates to a program recording system for recording a broadcast program, and relates to a remote controller, and a method and a program for remote control.

### BACKGROUND ART

A television broadcasting by satellite, ground wave, or the like is being digitized. The digitization of broadcasting allows the number of channels to be increased. By increase in the number of channels, the number of options of programs selected by the user also increases. However, it is getting more difficult for the user to select programs only by changing channels. Consequently, for example, in digital BS broadcasting, information for electronic program guide (hereinafter, called "EPG information") is transmitted by being multiplexed on a television signal together with video and audio signals and the like. The EPG information shows a schedule of broadcast programs. A receiver for broadcasting displays a program table on a monitor on the basis of the EPG information. The user can select a program to watch from programs included in the program table displayed on the monitor. If the selected program is not being broadcast at present, the program is reserved for watching or recording.

The EPG information is repeatedly broadcast. If the broadcasting schedule of programs is changed, the change is reflected on the EPG information on the side of a broadcasting station. Even though a program is added, for example, if a user finds the program on the program table corresponding to the changed EPG information, the user can select the added program for watching or recording and watch the program or reserve the newly selected program for recording.

If the user goes out, the user may see the program table on the mobile telephone. The EPG information is not only broadcasted but also provided through the Internet. As described in Japanese Unexamined Patent Publication No.2001-145140, a user can see the program table on the mobile telephone with the function as the browser and reserve the program for recording.

However, because of limitations of a display area allocated on a remote control device such as the mobile telephone and the remote controller, the browsability of programs is mostly insufficient, and even if the latest program table includes the added program, it is likely for the user to miss the program.

### DISCLOSURE OF INVENTION

The present invention has been achieved in consideration of such problems of conventional techniques and its object is to provide a program recording system that allows the user find the change of the broadcasting schedule easily and surely, and to provide a remote controller, and a method and a program for remote control.

In accordance with the present invention, there is provided a program recording system including a recorder recording a broadcast program, a sever device storing information of a broadcasting schedule of broadcast programs and a remote controller for operating the recorder by remote control.

In the recorder, retaining means retains recording reservation information including at least recording start time, and duration or recording end time of a program reserved for recording. Control means controls recording means on the basis of the retained recording reservation information, and the recording means records the program reserved for recording. Updating means updates the recording reservation information in a response to an update request from an external device.

A user can update the recording reservation information with the remote controller. In this case, acquiring means acquires the information of the broadcasting schedule from the server device and the recording reservation information from the recorder. Deciding means decides displayed information shown on the display on the basis of a point of difference between the acquired recording reservation information and the acquired recording reservation information of the broadcasting schedule. And, remote control means requests to the recorder for updating the recording reservation information.

With such program recording system, the user can easily and surely find the change of the broadcasting schedule by seeing the displayed information.

The displayed information includes information for displaying a program of which a broadcasting schedule is changed in the state that the program is discriminated from the programs reserved for recording. The user may see the recording reservation information only for the program of which the broadcasting schedule is changed without confirmation of the information for all of the programs.

In the case that the user changes the recording reservation information on the basis of the change of the broadcasting schedule, the update request is a request for matching the recording reservation of the program of which the broadcasting schedule is changed with the changed broadcasting schedule.

The server device may not be separated from the recorder but be in the recorder. In this case, the retaining means practically retains the recording reservation information and the broadcasting schedule from the recorder.

In the case that the new program is added into the broadcasting schedule, the user may be notified of the added program by including the program on the displayed information, and also the recorder may positively notify the user of the added program as described in Japanese Unexamined Patent Publication No. 2000-358199, for example. When a receiver for broadcasting described in the publication determines that a program newly added into the program schedule information is a program desired by the user, the receiver notifies the user of the addition of the program desired by the user. Determination is made on the basis of program narrowing information that is preset by the user. The program narrowing information is information of keywords and types entered or selected by the user to narrow programs desired by the user. However, it is necessary for the user to preset the keywords and types, and to set the program narrowing information every time programs desired by the user change due to changes in program schedule, taste, and the like. If the user feels burdensome to change the setting, the recent interest of the user is less reflected in a new program to be notified.

In order to avoid such burden, the recorder may further comprise addition program selecting means and notifying means. The addition program selecting means selects a program from programs added into the broadcasting schedule on the basis of at least one of recorded program information regarding a recorded program and the recording reservation information. The notifying means notifies the remote controller of the selected program. The interest of the user is reflected on recorded programs and programs reserved for recording. The recorded program information or the recording reservation information is not information set by the user to narrow notified programs. Because the recorder can automatically retain such information, the burden of the user is greatly lightened by selecting the notified program on the basis of the recorded program information and the recording reservation information.

In the recorder, the control means may automatically reserve for recording and record the program added into the broadcasting schedule. When the program added into the broadcasting schedule is automatically reserved for recording or recorded, the time from the addition to the broadcast of the program gets short, and even if the user knows nothing about the addition of the program, the user can avoid to miss the program.

However, in this case, there is a fear that the program that the user feels no need of reserving for recording or of recording is reserved for recording or is recorded. Therefore, it is preferable that the recorder sends to the remote controller a message that the program added into the broadcasting schedule is reserved for recording or is recorded.

The remote controller may comprise comparing means and deleting instruction means. The comparing means compares recording volume needed for recording a program to be additionally reserved for recording with remaining volume of a recording medium, and shows the result of comparison on the display. When the user determines that the remaining volume is insufficient to record the program according to the displayed result of comparison, the user deletes the program recorded on the recording medium with the deleting instruction means. Thus, even if the user adds the program reserved for recording with the remote controller, it is avoided that only a part of the program is recorded and the recorded program is accidentally overwritten.

In order to obtain recording volume for recording a program, the remote controller may comprise bit-rate instruction means. When the user determines that the remaining volume is insufficient to record the program according to the displayed result of comparison, the user gives instructions to a bit rate for recording the program with the bit-rate instruction means. Thus, even if the user adds the program reserved for recording with the remote controller, the recording volume for recording the program is suitably obtained.

The update request to the recorder from the remote control means of the remote controller may include personal information specifying a user of the remote controller. A phone number of a mobile telephone and an ID stored in an IC card removably mounted on a mobile telephone are used as the personal information, for example. By using the personal information included in the update request, the recorder can identify the user of the remote controller, and control the recording and the reproduction on the basis of the result of the identification.

For example, the recorder capable of reproducing and displaying the program is often shared by family members. And the recording volume of the recording medium is large. Thus, the amount of the programs to be recorded is greatly larger. In result, it is difficult for the user to find programs reserved for recording or recorded personally.

There also may be a case of marking different scenes in a single program by a plurality of people. Even in the case, if the recorder displays a recorded program or a marked image filtered through the personal information, a user can easily select a program or a scene to be reproduced and displayed from the programs or in the program with the recording operated by the user.

In accordance with another aspect of the present invention, there is also provided the above-mentioned remote controller and a remote control method. In the remote control method for operating the recorder by remote control with the remote controller, the information of the broadcasting schedule and the recording reservation information are respectively acquired from the server device and the recorder. The displayed information shown on the display is decided on the basis of a point of difference between the acquired recording reservation information and the acquired information of the broadcasting schedule. And, the request for updating the recording reservation information to the recorder is made.

Further, there is provided a program that makes a computer execute the remote control method. In this case, for example, the computer working as the remote controller acquires the information of the broadcasting schedule and the recording reservation information, decides the displayed information, and requests for the updating. This program is on market through the electronic communication line for example the Internet, and also is on market in the form of being recorded on a computer readable recording medium for example CD-ROM.

### BRIEF DESCRIPTION OF DRAWINGS

FIG. 1 is a configuration diagram of a program recording system in the first embodiment;
FIGS. 2A and 2B are diagrams showing a concrete example of information regarding programs of an EIT;
FIG. 3 is a flowchart illustrating the remote control method of the present invention;
FIG. 4 is a configuration diagram of a modified example of the program recording system in the first embodiment;
FIG. 5 is a configuration diagram of another modified example of the program recording system in the first embodiment;
FIG. 6 is a schematic view of a remote controller in the first embodiment;
FIG. 7 is a configuration diagram of the program recording system in the second embodiment;
FIG. 8 is a diagram showing an example of a recording reservation screen in the second embodiment;
FIG. 9 is a flowchart for illustrating the operation of the remote controller;
FIG. 10 is a flowchart for illustrating the operation of a recorder;
FIG. 11 is a diagram for illustrating a management table;
FIG. 12 is a diagram showing an example of setting on a recording reservation screen;
FIG. 13 is a configuration diagram of the program recording system in the third embodiment;
FIG. 14 is a diagram showing another example of setting on the recording reservation screen;
FIG. 15 is a diagram showing an example of information stored in a management table;
FIG. 16 is a diagram showing further another example of setting on the recording reservation screen;
FIGS. 17A to 17D are diagrams showing a concrete example of information regarding programs of an EIT in the case where programs are added;
FIG. 18 is a diagram showing an example of information stored in the management table in the case where programs are added;
FIG. 19 is a diagram showing an example of the recording reservation screen in the case where programs are added;
FIG. 20 is a diagram showing another example of the recording reservation screen in the case where programs are added;
FIG. 21 is a diagram showing another example of information stored in the management table in the case where programs are added;
FIG. 22 is a diagram showing further another example of the recording reservation screen in the case where programs are added;
FIG. 23 is a diagram showing an example of the recording reservation screen in the third embodiment;
FIG. 24 is a diagram showing an example of a list of recorded programs in the third embodiment;
FIG. 25 is a configuration diagram of another recording system in the third embodiment;
FIG. 26 is a flowchart illustrating the operation of the other recording system in the third system;
FIG. 27 is a diagram showing a concrete example of a recorded program management table;
FIG. 28 is a configuration diagram of a recording/ reproducing system in the third embodiment;
FIG. 29 is a diagram showing a user management table in the fourth embodiment;
FIG. 30 is a diagram showing a recording information management table in the fourth embodiment;
FIG. 31 is a diagram showing a marker management table in the fourth embodiment;
FIG. 32 is a flowchart of data transmission in a mobile telephone;
FIG. 33 is a diagram showing a control command communicated between a mobile telephone and a recording/reproducing system;
FIG. 34 is a diagram showing a specific operator recording title list table;
FIG. 35 is a diagram showing a reproduction program selection screen displayed on a mobile telephone;
FIG. 36 is a diagram showing a specific operator marker registration list table;
FIG. 37 is a diagram showing a reproduction scene selection screen displayed on a mobile telephone;
FIG. 38 is a diagram showing a list of operation codes and operands of control commands;
FIG. 39 is a configuration diagram of a recording/reproducing system in the fifth embodiment;
FIG. 40 is a diagram showing a user management table in the fifth embodiment;
FIG. 41 is a diagram showing a control command in the fifth embodiment;
FIG. 42 is a configuration diagram of a recording/reproducing system in the sixth embodiment;
FIG. 43 is a diagram showing a recording information management table in the sixth embodiment;
FIG. 44 is a configuration diagram of a recording system in a seventh embodiment;
FIG. 45 is a diagram showing a recording operator management table in the seventh embodiment;
FIG. 46 is a diagram showing a management table in the seventh embodiment;
FIG. 47 is a diagram showing an example of a recorded program management table in the eighth embodiment;
FIG. 48 is a diagram showing an example of the management table in the eighth embodiment;
FIG. 49 is a diagram showing another example of the management table in the eighth embodiment;
FIG. 50 is a diagram for explaining operation of a recording system in the eighth embodiment;
FIG. 51 is a diagram showing an example of a deletion level setting screen;

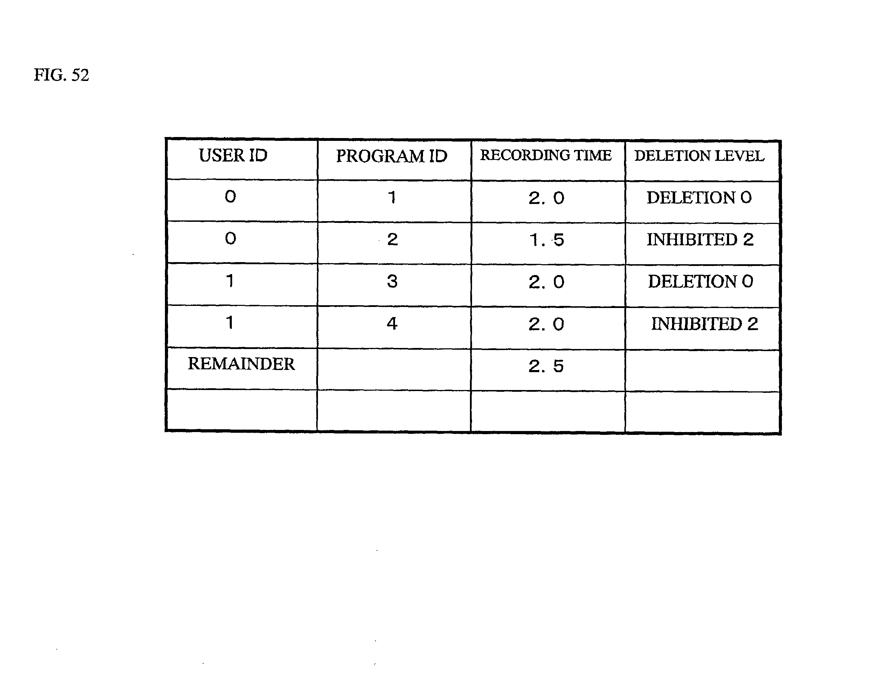

FIG. 52 is a diagram showing another example of the deletion level setting screen; and
FIG. 53 is a diagram showing another example of the recorded program management table in the eighth embodiment.

### BEST MODE FOR CARRYING OUT THE INVENTION

Embodiments of the invention will be described hereinafter with reference to the drawings.

### First Embodiment

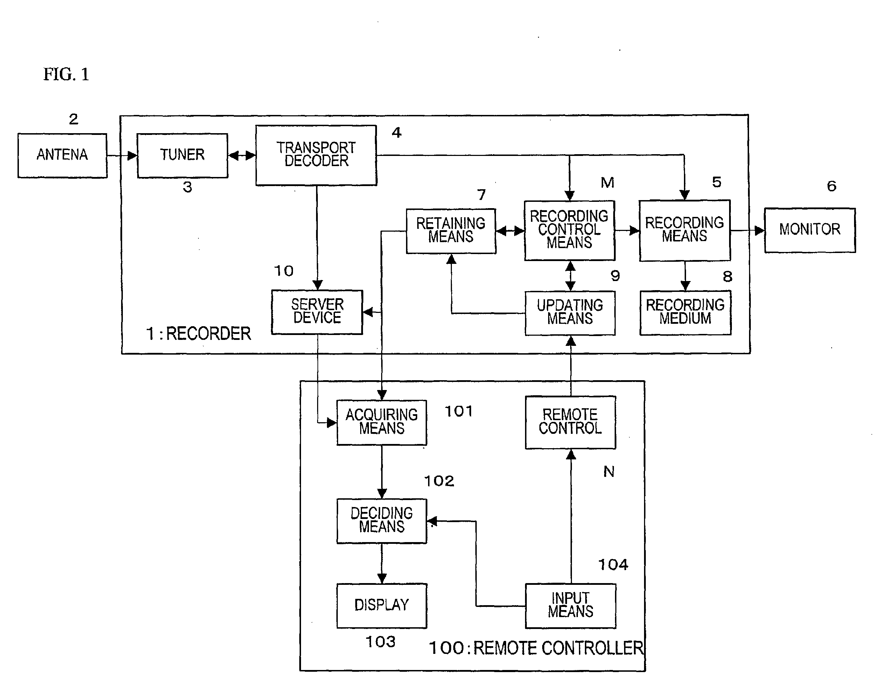

As shown in FIG. 1, the program recording system on the first embodiment comprises a recorder 1 and a remote controller 100.

The recorder 1 receives output signals of a plurality of transponders (relays) by an antenna 2. A tuner 3 selects one of the signals received by the antenna 2 and outputs the selected signal to a transport decoder 4. The transport decoder 4 selects one of a plurality of channels included in the signal. Usually, programs of four to six channels are included in the output signal (transport stream). Further, the transport decoder 4 separates a video signal, an audio signal, and SI ( Service Information) from the signal of the selected channel (called "channel 1" in the following description) and outputs the video and audio signals to an AV decoder 5. The SI includes an EIT (Event Information Table) of the programs of the channel.

The EIT is a table in which information of each event (program) is described. In this embodiment, the EIT is used as information of a broadcasting schedule of programs. The information of a program includes a "eventid" field in which an identification number of the program is described, a "start" field in which start time of the program is described, a "duration" field in which duration of broadcast of the program is described, and a program title field in which the title of the program is described.

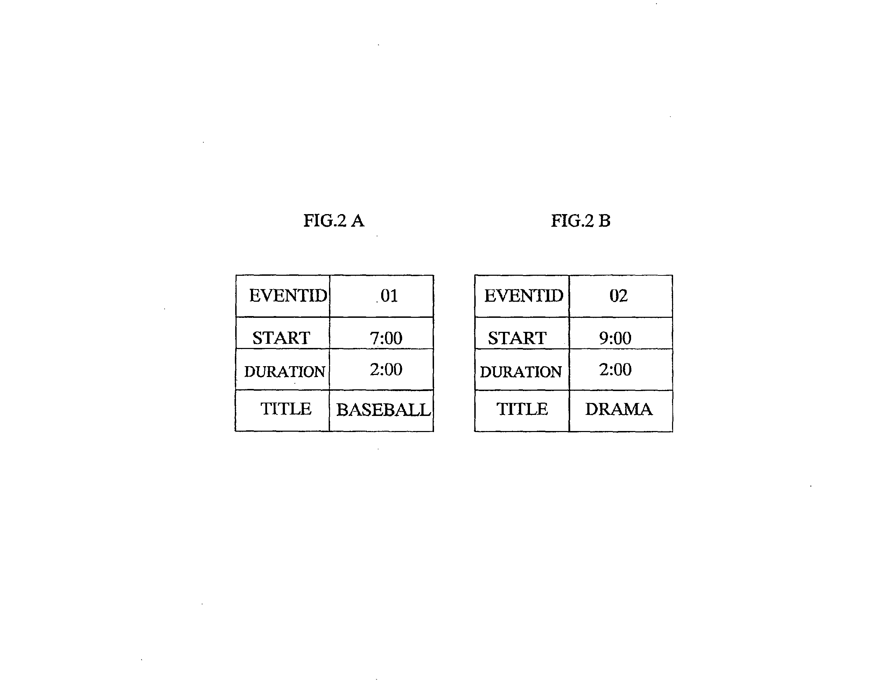

For example, in the case where a baseball game is broadcast from 7:00 to 9:00, as shown in FIG. 2A, "01" is described in the eventid field of the program, "7:00" is described in the "start" field, "2:00" is described in the duration field, and "baseball" is described in the program title field. In the case where a drama is broadcast from 9:00 to 11:00, as shown in FIG. 2B, "02" is described in the eventid field of the program, "9:00" is described in the start field, "2:00" is described in the duration field, and "drama" is described in the program title field.

Recording control means M takes such an EIT from the transport decoder 4. Recording means 5 the information of the EIT as a program table on the monitor 6.

When the program selected from the program table is reserved for recording, the recording control means M extracts the identification number, title, start time, and duration of the selected program from the EIT. The recording control means M determines the extracted start time and duration as recording start time and recording duration, and stores the identification number, title, broadcasting channel, recording start time, recording duration as program recording information on retaining means 7. If the program of "01" in the identification number shown in FIG. 2 is reserved for recording, retaining means 7 retains recording reservation information including information of "01" as the identification number, "baseball" as the title, and "2:00" as the recording duration.

When it is the recording start time, the recording control means M controls the recording means 5 on the basis of the recording reservation information retained by retaining means 7, the recording means 5 decodes video and audio signals of channel 1 outputted from transport decoder 4, and records the decoded video and audio signals on the recording medium 8. For the recording duration from the recording start time, the recording means 5 records the video and audio signals on the recording medium 8 according to the control of the recording control means M, and ends the recording after the recording duration. Thus, the program of which the recording reservation information is retained by retaining means 7 is recorded.

Updating means 9 updates the recording reservation information retained by retaining means 7 in a response to an external device.

The user can use the remote controller 100 for operating the recorder 1 by remote control, for example, for requesting for updating the recording reservation information. The remote controller 100 corresponds to a remote attached to the recorder 1 or the mobile telephone owned by the user.

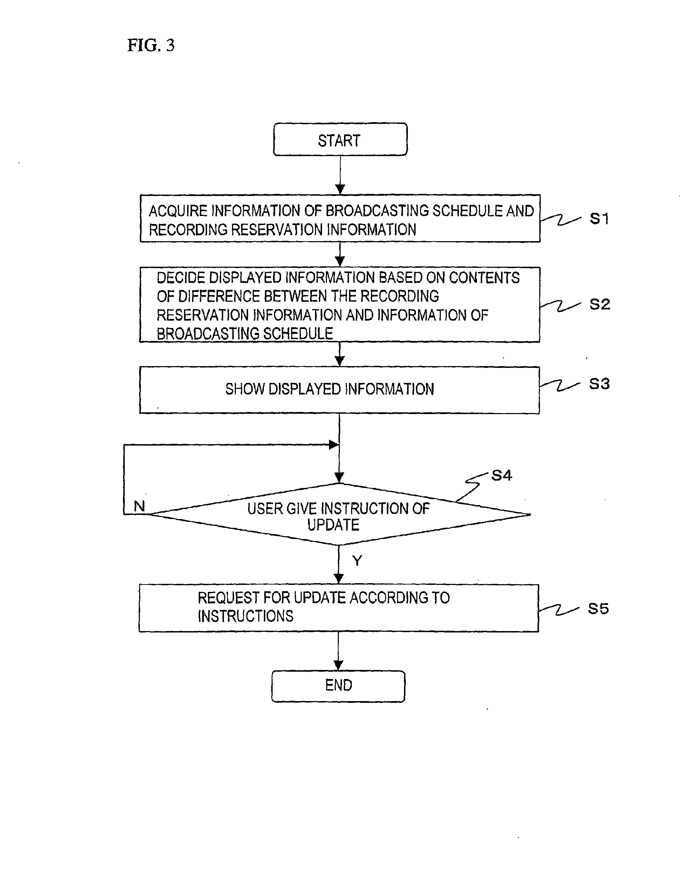

In the case that the user gives instructions of updating the recording reservation information with the remote controller 100, acquiring means 101, deciding means 10 and remote control means N work according to the steps shown in FIG. 3.

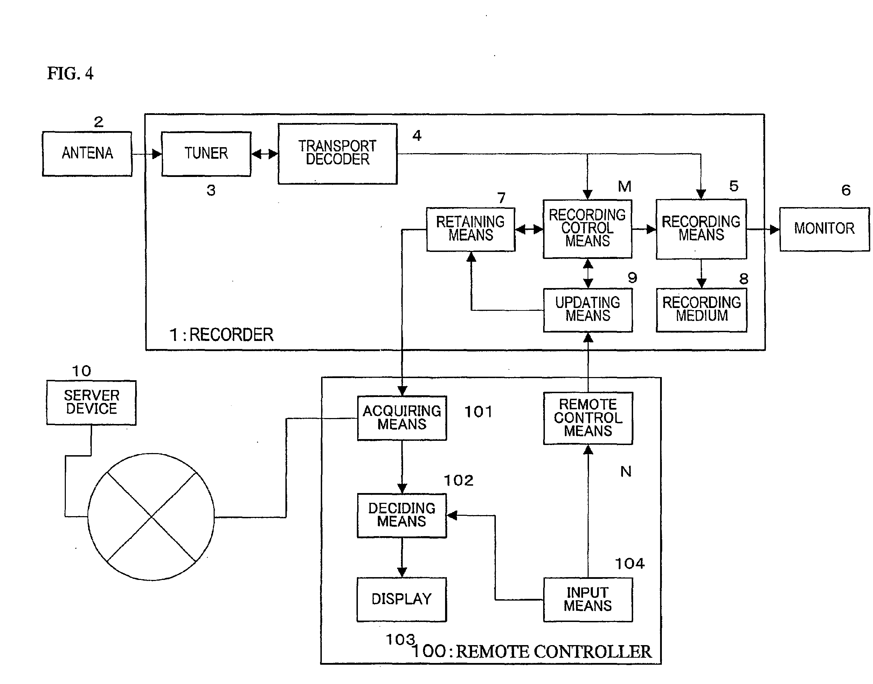

First, the acquiring means 101 acquires information of a broadcasting schedule and the recording reservation information from the recorder1 (S1). In this embodiment, the server device 10 is provided in the recorder 1. The server device 10 receives a request from the acquiring means 101, and sends to the acquiring means 101 the information of the broadcasting schedule and the recording reservation information. For example, the server device 10 works as a HTTP server, and the acquiring means 101 works as a HTTP client. The server device 10 usually extracts information of the EIT from the transport decoder 4, and stores the information as the information of the broadcasting schedule. In this embodiment, if the server device 10 receives the request from the acquiring means 101, the program runs on the server device 10, and the recording reservation information retained by retaining means 7 is read out to the server device 10 according to the program. The information read out to the server device 10 is transmitted along with the information of the broadcasting schedule to the acquiring means 101 from the server device 10. The acquiring means 101 may acquire the information of the broadcasting schedule from the server device 10 and the recording reservation information from the retaining means 7 respectively. The program recording system may comprise the server device 10 separated from the recorder 1 as a HTTP server on the Internet as shown in FIG. 4, for example. In the case, the acquiring means 101 acquires the information of the broadcasting schedule from the server device 10 and the recording reservation information from the recorder 1.

When the acquiring means 101 acquires the information of the broadcasting schedule and the recording reservation information, the deciding means 102 decides displayed information shown on the display 103 on the basis of a point of difference between the acquired recording reservation information and the acquired information of the broadcasting schedule.

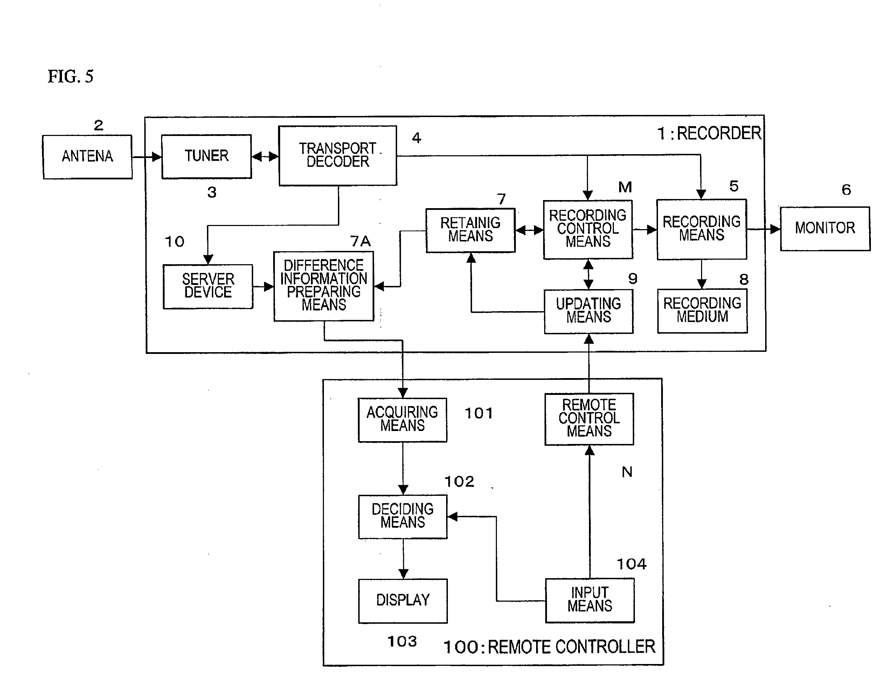

For example, the deciding means 102 compares the title, recording start time and recording duration of the recording reservation information with the title, recording start time and recording duration included in the EIT for each program of which the recording reservation information is acquired, and determines that there are differences. In the case that there are differences for a program, the deciding means 102 extracts the program as the program of which the broadcasting schedule is changed, and prepares the displayed information on the basis of that. This displayed information includes information for displaying the extracted program in a stat that the program is discriminated from the programs reserved for recording. This information may be information showing a display color of the character expressing the extracted program. And also this information may be a background color of the area on which the extracted program is expressed or a thickness of the rectangular frame enclosing the area. Such information for the extracted program is different from other programs reserved for recording. In the case that the server device 10 is provided in the recorder 1, the recorder 1 can prepare difference information based on the difference between the both without communication to an external device, because the both of the recording reservation information and the broadcasting schedule is retained in the recorder 1. In this case, the recorder 1 will comprise difference information preparing means 7A for preparing the difference information based on a difference between the recording reservation information and the broadcasting schedule, as shown in FIG. 5. The acquiring means 101 of the remote controller 100 acquires the difference information from the recorder 1. The deciding means 102 prepares the displayed information on the basis of the difference information acquired by the acquiring means 101 or transmitted from the recorder 1.

When the deciding means 102 prepares displayed information, the deciding means 102 outputs the displayed information to the display 103, and the displayed information is shown on the display 103 (S3).

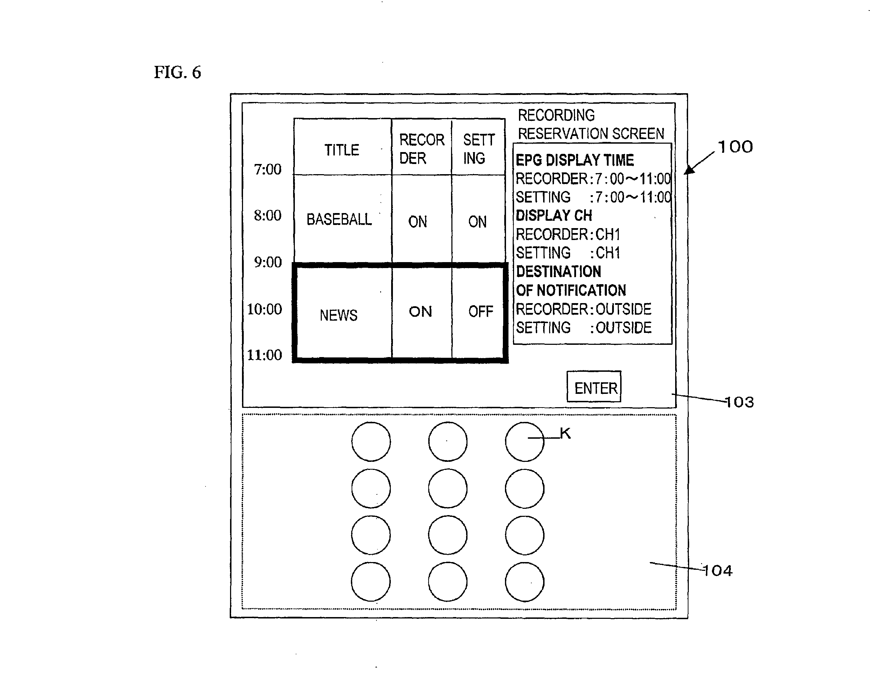

It is assumed that only the two programs are reserved for recording shown in FIG. 2, and the program broadcast for two hours from nine on channel 1 is changed from the drama to the news. In this case, the recording reservation screen is shown on the display 103, as shown in FIG. 6. A thickness of a rectangular frame enclosing an area for a program of which the broadcasting schedule is changed is larger that for programs of which the broadcasting schedule is not changed. Consequently, the user can discriminate the both on the basis of the difference in the thickness of the rectangular frame. For brief description, only two programs are reserved for recording in the above-cited example. Even if three or more programs are reserved for recording, the user can easily and surely find the program of which the broadcasting schedule is changed in the same way, and immediately determine whether it is necessary to update the recording reservation information.

When the user who determines that there is no necessity for recording the news updates the recording reservation information with the input means 104 and gives the remote controller 100 instructions to cancel the recording reservation (S4), the remote control means N requests for updating the recording reservation information to the recorder 1 on the basis of the instructions (S5). The request is transmitted to the updating means 9, and the updating means 9 deletes the corresponding recording reservation information retained by retaining means 7.

In the case that the user determines that it is necessary to record the news and gives the remote controller instructions to change the recording reservation, also the remote control means N request for updating the recording reservation information to the recorder 1 on the basis of the instructions. In this case, the update request is a request for matching the recording reservation of the program of which the broadcasting schedule is changed with the changed broadcasting schedule. The remote control means N transmits to the updating means 9 the new recording reservation information prepared from the information of the broadcasting schedule, and the updating means 9 overwrites the corresponding recording reservation information retained by retaining means 7 with the received recording reservation information. When the remote control means 7 only requests for matching, the updating means 9 may update the corresponding recording reservation information retained by retaining means 7 according to the changed broadcasting schedule.

By the way, in the case that the remote controller 100 is a mobile telephone with the function as the browser and is provided with a CPU and a memory for accomplishing the function as the browser and the other function, even if the exclusive hardware is installed on the remote controller 100, the CPU can execute the above procedure and work as the above means by being described the above procedure in the program.

### Second Embodiment

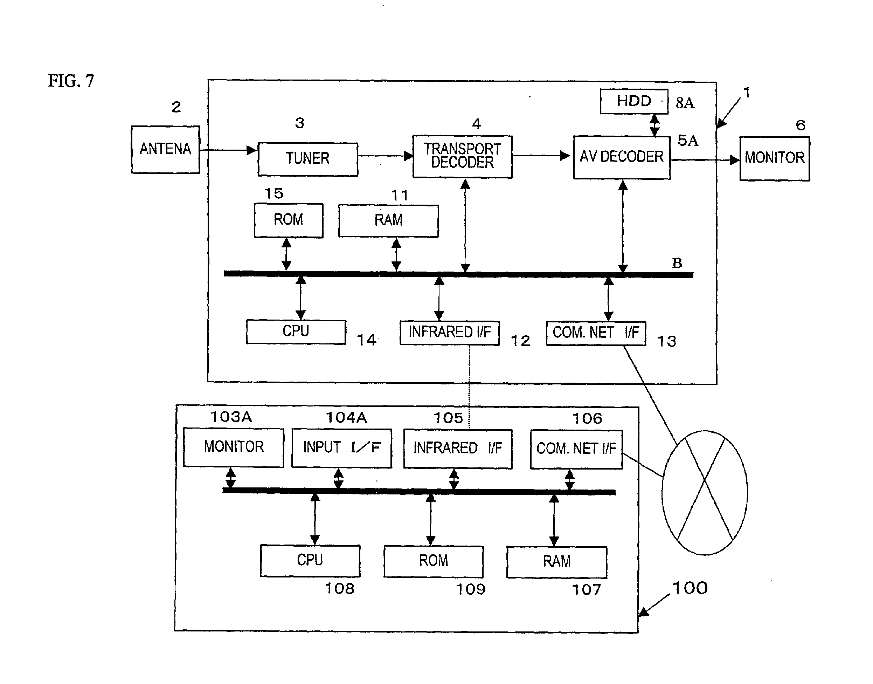

In this embodiment, the recorder 1 and the remote controller 100 as shown FIG. 7 are used as the recorder and the remote controller of the program recording system.

In the recorder 1, an AV decoder 5A is used as the recording means 5, and a HDD 8A is used as the recording medium on which the program is recorded. A RAM 11 is used as the retaining means 7, and the recording reservation information is retained on the management table in the RAM 11. The recorder 1 can use for the communication with the remote controller 11 an infrared interface 12 or a communication network interface 13. The communication network interface is an interface for using the communication interface such as the public telephone network, the mobile communication network and the Internet. The recorder 1 is provided with a CPU 104 and a ROM 15, and the CPU 104 executes various programs stored on the ROM 15 to accomplish various functions. The updating means 9 and the recording control means M are also accomplished if the CPU 104 executes the programs.

In the remote controller 100, a monitor 103A is used as the display 103, and an input interface 104A is used as the input means 104. The remote controller 100 is provided with an infrared interface 105, a communication interface 106, a RAM 107, a CPU 108 and a ROM 109 in the same way as the recorder 1. The CPU 108 executes various programs stored on the ROM 109 to accomplish various functions. The acquiring means 101, the deciding means 102 and the remote control means N are also accomplished if the CPU 108 executes the programs. The infrared interface 105 or the communication interface 107 is used for the communication between the acquiring means 101 or the remote control means N and the recorder 1. In this embodiment, the remote control means N not only requests for the updating but also controls the whole of the remote controller 100.

As shown in FIG. 6, a plurality of selection keys K is installed on the input interface 104A on the remote controller 100. The user can give various instructions by operating the selection keys K.

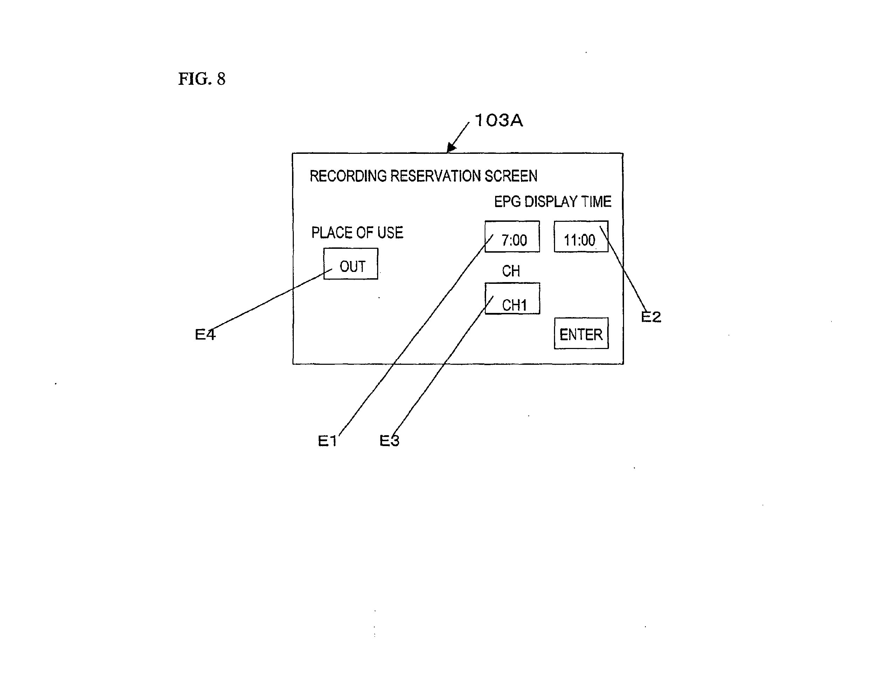

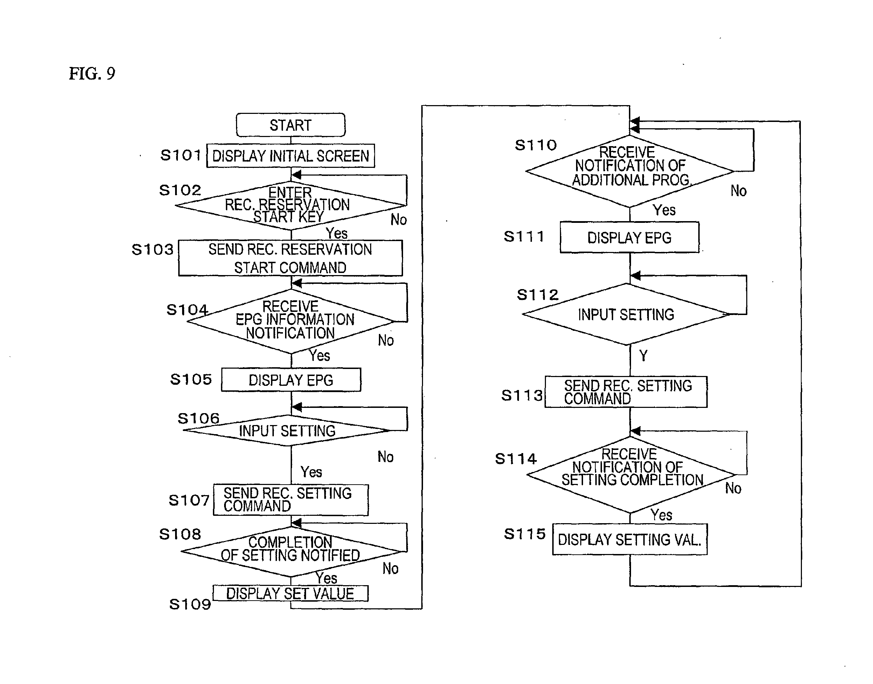

When the user gives an instruction of preset recording by using the input interface 104 A, the instruction is sent to the remote control means N of the remote controller 100. On receipt of the instruction, the remote control means N displays an initial screen as shown in FIG. 8 onto a monitor 103A of the remote controller 100 (step S101 in FIG. 9). The user sets EPG display time, EPG display channel, and the place of use, while seeing the display.

The EPG display time denotes a period of time of the EPG information displayed on the monitor 103A. When the user wishes to display the EPG information from 7:00 to 11:00, by using the input interface 104A, "7:00" is set in a display start time setting area E1 and "11:00" is set in a display end time setting area E2.

The EPG display channel denotes a channel of the EPG information displayed on the monitor 103A. When the user wishes to display the EPG information of channel 1, "channel 1" is set in a display channel setting area E3.

The place of use denotes a place where the remote controller 100 is used at the time of making a recording reservation. When the remote controller 100 is used in a room where the recorder 1 is disposed, "inside of room" is set in a use place setting area E4. In the case that "inside of room" is set as the place of use, the communication between the recorder 1 and the remote controller 100 is through the infrared interfaces 12 and 105. On the other hand, when the remote controller 100 is used out of the room where the recorder 1 is disposed, "outside of room" is set in the use place setting area E4. In the case that "outside of room" is set as the place of use, the communication between the recorder 1 and the remote controller 100 is through the communication interfaces 13 and 106.

In the case where it is not particularly necessary to limit the EPG display time and EPG display channel, the user can set a value of "ALL" indicative of no necessity of limitation in all of the items. However, in this setting, the number of objects to be displayed increases, so that the communication time and communication cost required for communication between the recorder 1 and remote controller 100 increase.

After setting the EPG display time, EPG display channel, and use place, the user puts the cursor on an enter button on the monitor 103A. If the user clicks a selection key K included in the input interface 104A of the remote controller 100 in such a state (step S102 in FIG. 9) , the information set as described above is notified to the remote control means N.

In this case, a recording reservation start command including parameters indicating that the EPG display time is from 7: 00 to 11:00 and the EPG display channel is channel 1 is transmitted to the recording control means M of the recorder 1 (step S103 in FIG. 9).

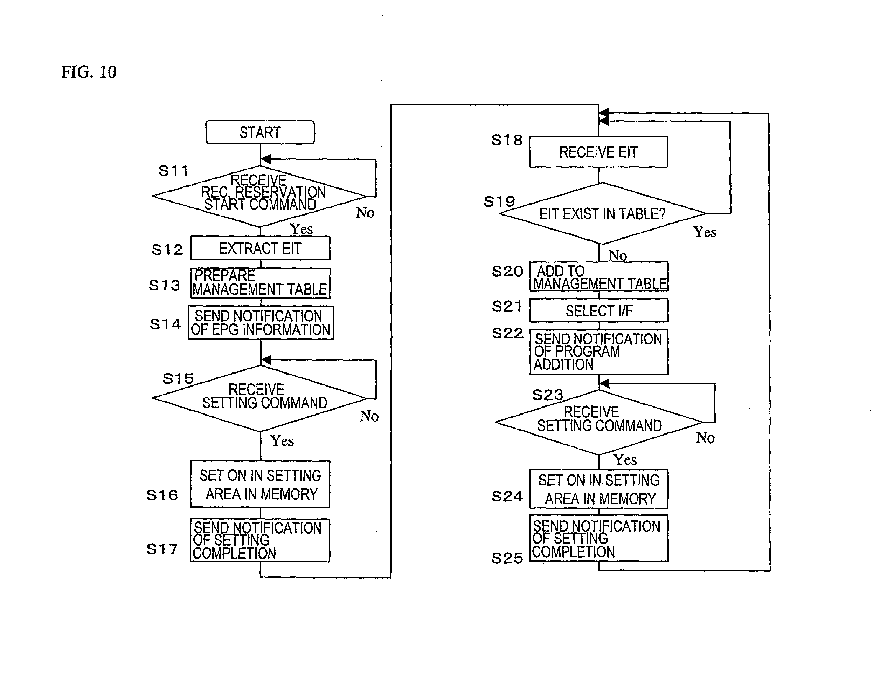

When the recorder 1 receives the recording reservation start command (step S11 in FIG. 10), the recording control means M interprets the contents of the parameters included in the command, recognizes that the EPG display channel is the channel 1, and controls the tuner 3 so as to select the channel 1. The recording control means M stores the parameters included in the recording reservation start command into a RAM 11 and starts a process of taking the EIT from the transport decoder 4 on the basis of the contents of the parameters (step S12 in FIG. 10).

Since it is shown in the parameters that the EPG display time is from 7:00 to 11:00, in this case, the recording control means M extracts information of all of programs each having a value described in the start field from 7:00 to 11:00. However, it is now assumed that information of two programs shown in FIGS. 2A and 2B are extracted.

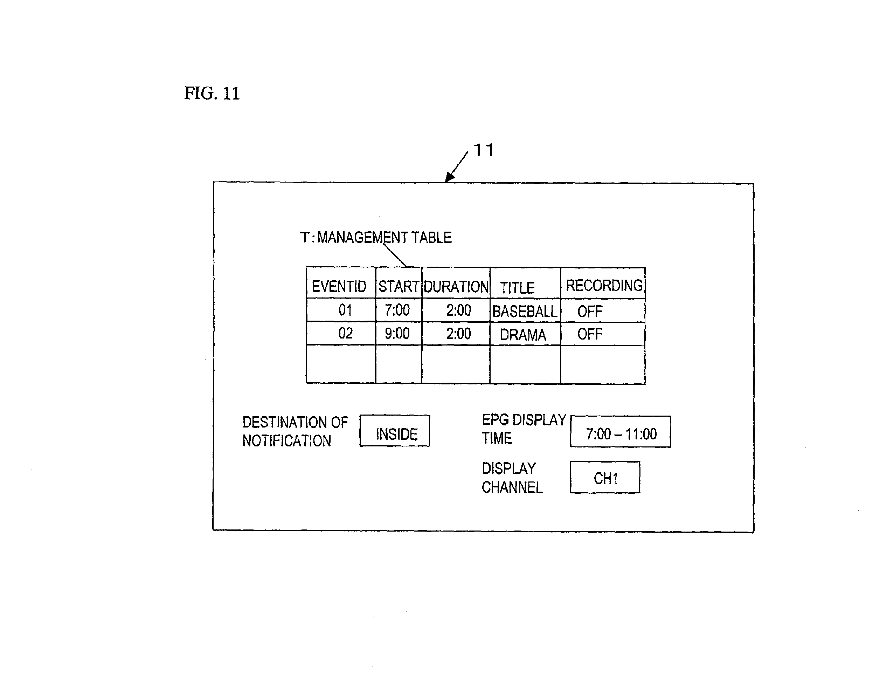

The recording control means M recognizes that a baseball game is to be broadcast from 7:00 to 9:00 and a drama is to be broadcast from 9:00 to 11:00. Specifically, the recording control means M generates the management table T on the RAM 11 and stores information of the baseball game broadcast and information of the drama broadcast into the fields in the management table T (step S13 in FIG. 10). As shown in FIG. 11, the management table T stores the recording reservation state showing whether the setting of the recording reservation is put at ON or OFF and the information relevant to the EIT so as to be associated with each other. In the example shown in FIG. 11, the recording reservation state is written in the recording setting field corresponding to each of the information of the two programs shown in FIGS. 2A and 2B.

The baseball game broadcast and the drama broadcast are not yet reserved for recording but are just candidates to be reserved for recording at this point in time. Consequently, "OFF" is set in the recording setting field of the management table T regarding the broadcast of the programs.

Subsequently, the recording control means M stores the information indicating that the destination of notification is the inside of the room into the RAM 11 and transmits an EPG information notification including the information stored in the RAM 11 as parameters to the remote controller 100 (step S14 in FIG. 10). When the EPG information notification is received by the remote control means N of the remote controller 100, a recording reservation screen on which whether the broadcast program has to be reserved for recording or not can be selected is displayed on the monitor 103A (steps S104 and S105 in FIG. 9).

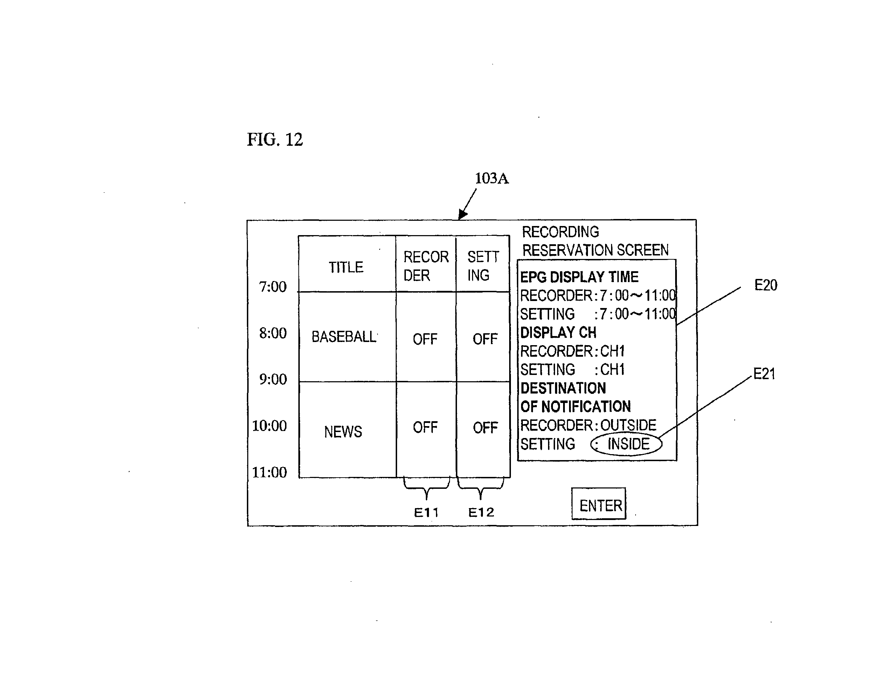

In the recording reservation screen, as shown in FIG. 12, not only an area E12 for setting whether the broadcast program has to be reserved for recording or not but also an area E11 for displaying the contents of setting on the recorder 1 (that is, parameters included in the EPG information notification) are provided.

The user can easily know the contents of the setting on the recorder 1 side at this point of time by referring to the data displayed in the area E11.

It is not always necessary that the areas E11 and E12 are separately provided. For example, in the case of setting whether a broadcast program has to be reserved for recording or not by using a pull-down menu, a default is displayed as the contents of the setting on the recorder 1 side (that is, the contents displayed in the area E11) in the pull-down menu.

In the recording reservation screen, a setting information display area E20 is provided.

In the setting information display area E20, the EPG display time, display channel, and destination of notification are displayed for each of the "recorder" and "setting". By displaying information for each of the "recorder" and "setting", in a manner similar to the case where not only the area E12 but also the area E11 is provided in the EPG information display area, the user can easily confirm the contents of setting.

That is, the EPG display time and the like displayed with the title of "recorder" are settings on the recorder 1 side at this point in time. On the other hand, the EPG display time and the like displayed with the title of "setting" are settings made by the user on the screen.

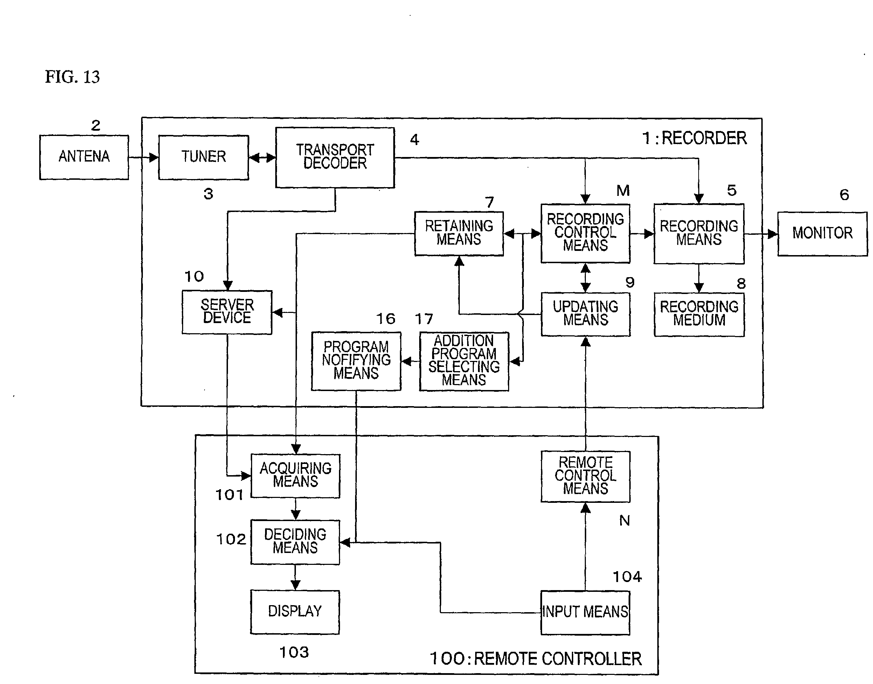

The destination of notification in the items to be set denotes the destination to which occurrence of a change in a broadcasting schedule is notified by the recorder 1 which detects the occurrence. In the program recording system in this embodiment, whether a broadcasting schedule is changed or not is determined, and the recorder 1 notifies the remote controller 100 of the program added into the broadcasting schedule. As shown in FIG. 13, the recorder 1 is provided with program notifying means 16 by the execution of the programs by the CPU 104. The program notifying means 16 gives notification of the added program. However, there is a fear that the notification is not given appropriately if the setting of the destination of the notification is not fixed. Accordingly, in an area E21 for setting the destination of notification, the value of "inside of room" is set in a circumstance where it is expected that the user is notified of the change in the broadcasting schedule on the inside of the room, and "outside of room" is set in a circumstance where it is expected that the user is notified of the change on the outside of the room.

It is therefore preferable to set "outside of room" when the user is going out during the period from 7:00 to 11:00 set as the EPG display time. "Outside of room" can be set in the case where the user is not going out, but that is not proper from the viewpoint of communication time and communication costs.

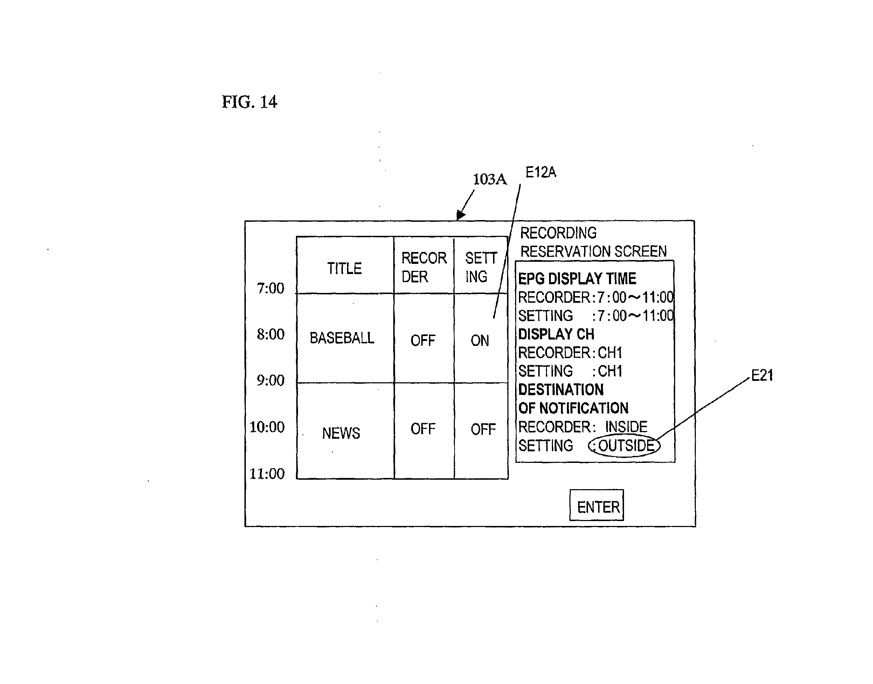

In the case where the user reserves a baseball game broadcast for recording, as shown in FIG. 14, the cursor is put on a baseball setting area E12A on the recording reservation screen to change the setting from "OFF" to "ON". In the case where the user is going out during the period from 7:00 to 11:00, the user puts the cursor on a notification destination setting area E21 on the recording reservation screen to change the setting from "inside of room" to "outside of room".

When the user depresses the selection key K included in the input interface 104A in a state where the cursor is put on the enter button (step S106 in FIG. 9), the remote control means N detecting the depression transmits the recording setting command including the parameters indicative of the contents of a change to the recorder 1 (step S107 in FIG. 9).

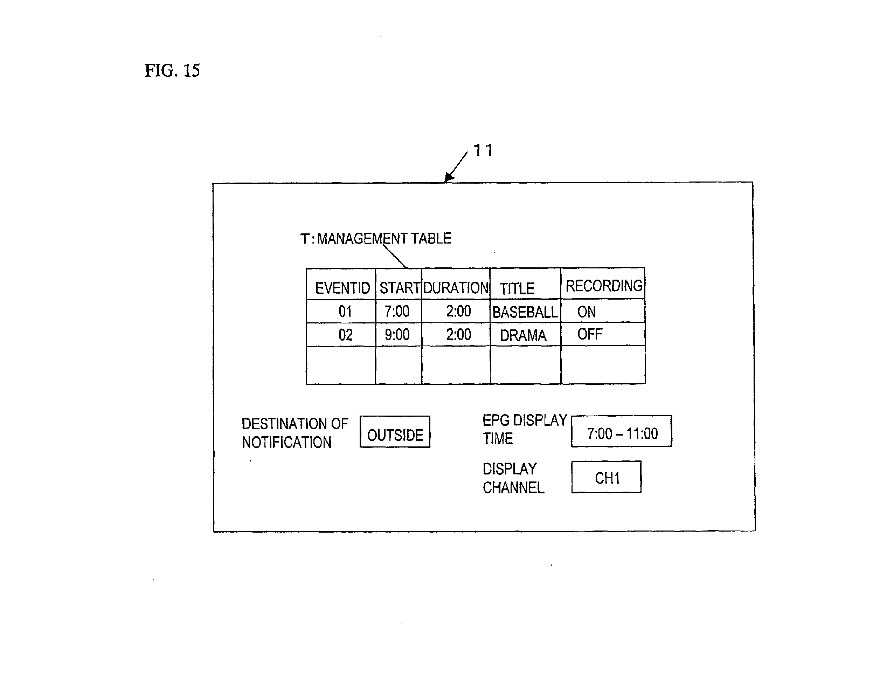

When the recorder 1 receives the recording setting command, the updating means 9 updates various information stored in the RAM 11 on the basis of the contents of the command (steps S15 and S16 in FIG. 10). Specifically, as shown in FIG. 15, the updating means 9 changes the data in the recording setting field of a record regarding a baseball game from "OFF" to "ON" and changes the destination of notification from "inside of room" to "outside of room".

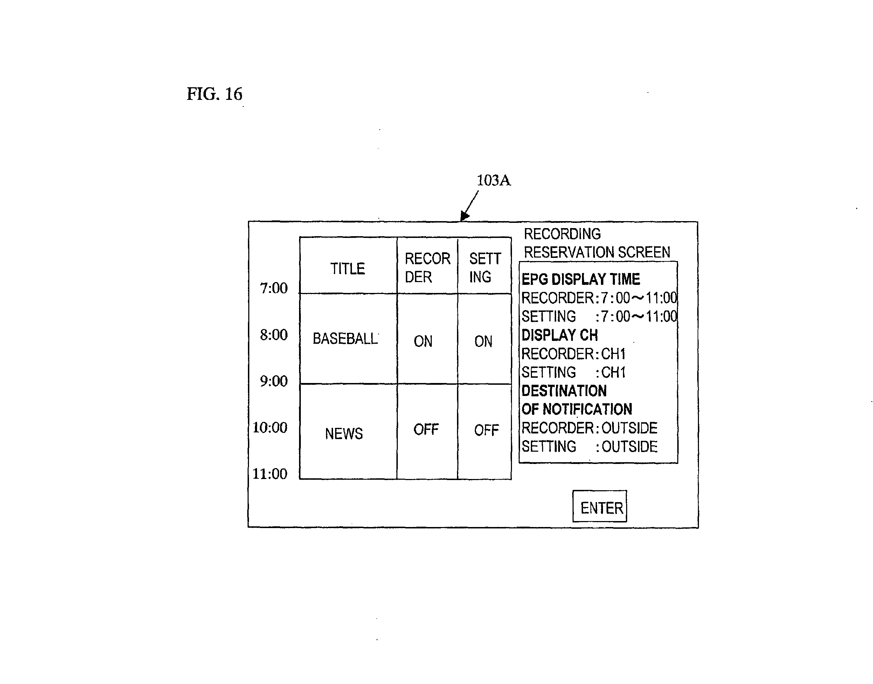

After the data in the RAM 11 is updated, the recording control means M returns a notification of completion of the setting to the remote controller 100. The remote control means N in the remote controller 100 that has received the notification displays the recording reservation screen in which the settings on the recorder 1 side are reflected onto the monitor 106, as shown in FIG. 16 (steps S108 and S109 in FIG. 9).

After completion of the recording reservation, the recording control means M always checks whether a change occurs in the broadcasting schedule or not by comparing the information of the program stored in the management table T with the EIT repeated broadcast at specific time intervals. If no change occurs in the broadcasting schedule, the recording control means M controls the AV decoder 5A so that writing to an HDD 8A becomes "ON" in the period from 7:00 to 9:00.

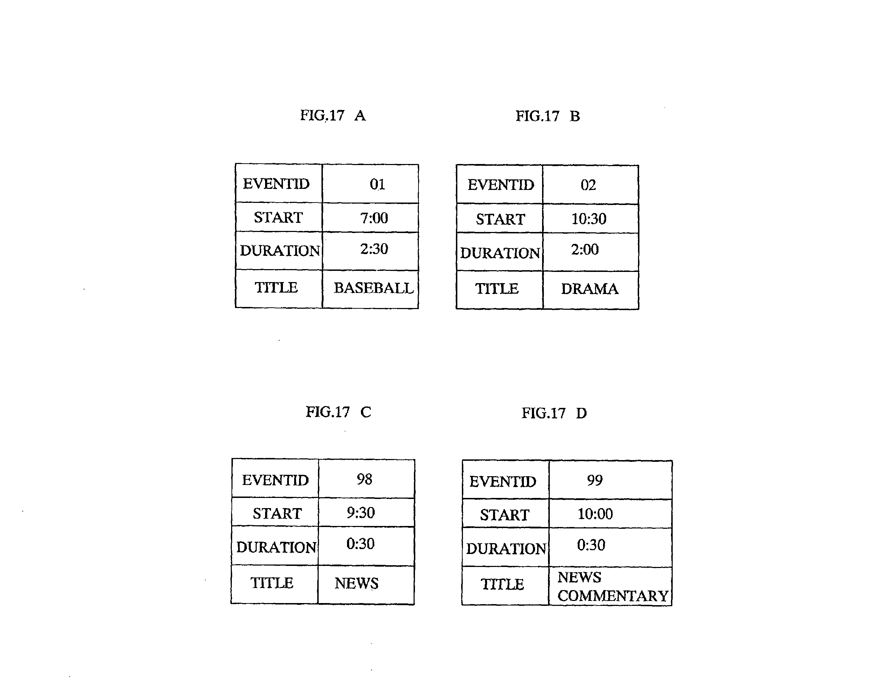

For example, in the case where, due to extra innings of the baseball game for 30 minutes, news and news commentary are to be additionally broadcast between the baseball game and a drama, the EIT includes information of four programs shown in FIGS. 17A to 17D.

Specifically, as shown in FIG. 17A, information of a program in which "01" is written in the "eventid" field, "7:00" is written in the start field, "2:30" is written in the duration field, and "baseball" is written in the program title field shows that the baseball game broadcast is extended to the period from 7:00 to 9:30. As shown in FIG. 17B, information of a program in which "02" is written in the "eventid" field, "10:30" is written in the start field, "2:00" is written in the duration field, and "drama" is written in the program title field shows that the broadcast start time of the drama is moved back to 10:30.

As shown in FIG. 17C, information of a program in which "98" is written in the "eventid" field, "9:30" is written in the start field, "0: 30" is written in the duration field, and "news" is written in the program title field shows that news is additionally broadcast after the baseball game broadcast. As shown in FIG. 17D, information of a program in which "99" is written in the "eventid" field, "10:00" is written in the start field, "0:30" is written in the duration field, and "news commentary" is written in the program title field shows that the news commentary is additionally broadcast after the news.

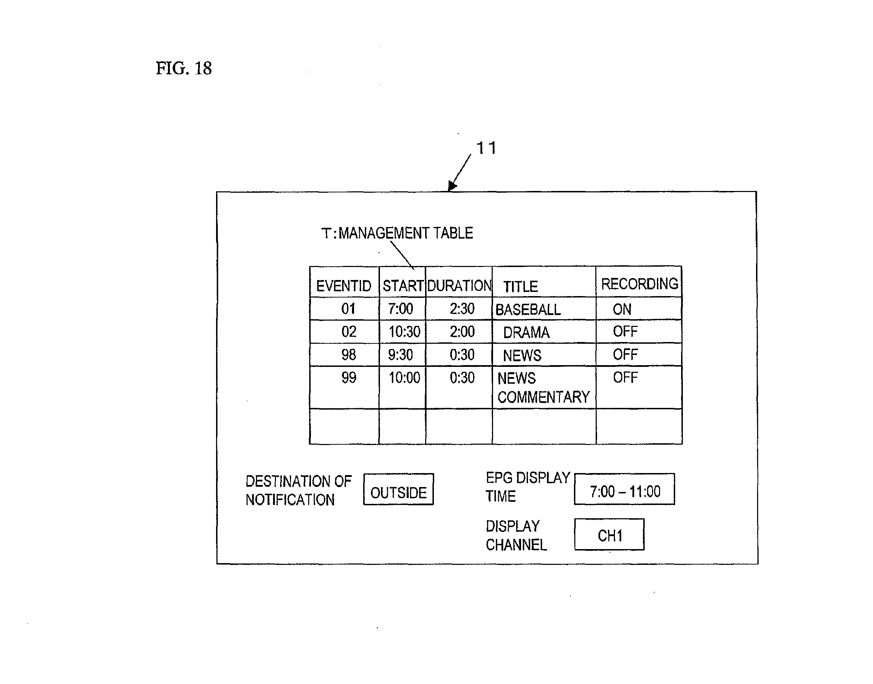

The recording control means M takes the EIT in which the information of the programs are written from the transport decoder 4 (step S18 in FIG. 10). When the recording control means M recognizes a change in the schedule of the baseball game broadcast which is reserved for recording, as shown in FIG. 18, the data in the duration field in the management table T is changed from "2:00" to "2:30".

The EIT taken as described above includes information of programs that do not exist in the management table T at this point in time (that is, information of "98" in the "eventid" and information of "99" in "eventid").

Consequently, the recording control means M recognizes that new programs are to be additionally broadcast and, as shown in FIG. 18, adds the information of the news and news commentary as addition programs to the management table T (steps S19 and S20 in FIG. 10). The recording control means M selects the communication network interface 13 since "outside of room" is set as the destination of notification and transmits a notification of program addition including the contents of the management table T to the remote controller 100 (steps S21 and S22 in FIG. 10).

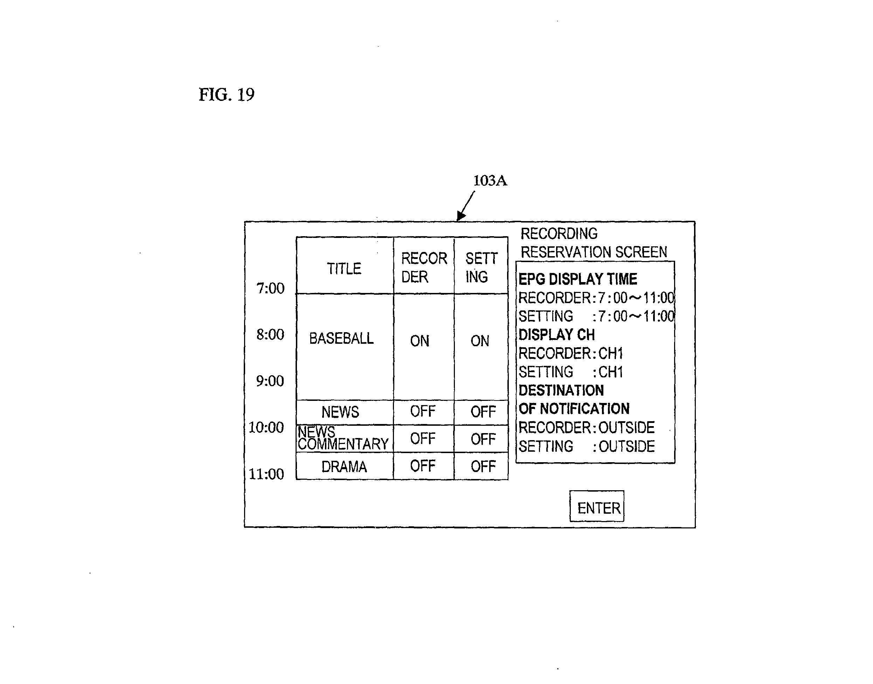

The remote control means N of the remote controller 100 which has received the notification of program addition displays the recording reservation screen in which the contents of the notification of program addition is reflected onto the monitor 106 as shown in FIG. 19 (steps S110 and S111 in FIG. 9). However, the user cannot expect when such a notification is received, so that it is preferable to generate a notification reception sound at the time of displaying the recording reservation screen. The notification may be transmitted as the recording reservation information at the time of being requested for acquirement by the acquiring means 9.

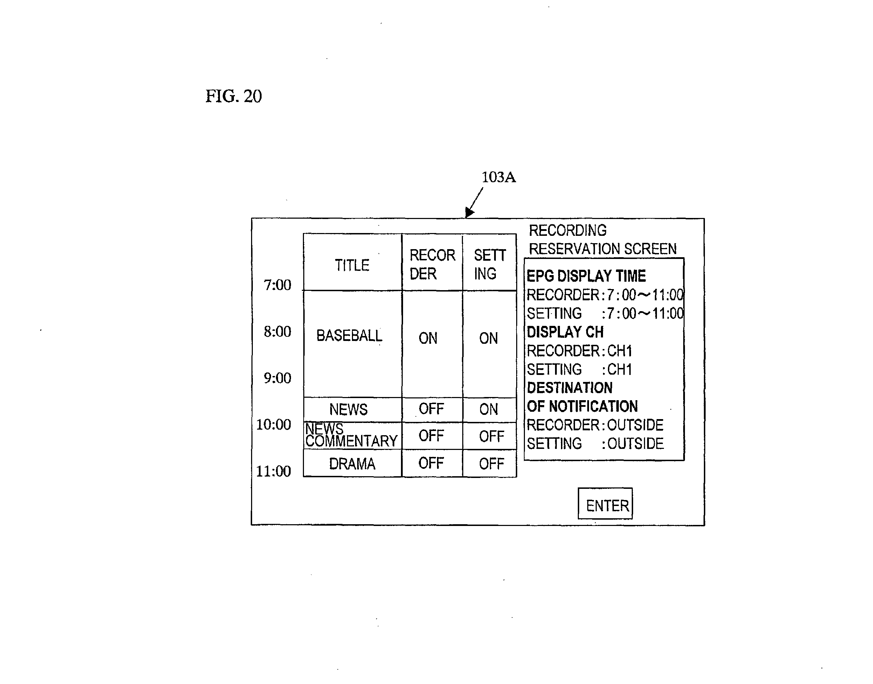

In such a manner, the user recognizes that a new program is to be additionally broadcast. When the user wishes to record, for example, the news broadcast among the addition programs, it is sufficient to put the cursor on the setting area of the news in the recording reservation screen to change the setting from "OFF" to "ON" as shown in FIG. 20. When the user depresses the selection key K in a state where the cursor is put on the enter button (step S112 in FIG. 9), the remote control means N prepares the recording setting command including the parameter indicative of the contents of the change, and the recording setting command is transmitted to the recorder 1 via the communication network interfaces 106 and 13 (step S113 in FIG. 9).

Since "inside of room" is unchangeably set in the place of use in the above description, it may be considered that the recording setting command is transmitted via the infrared interfaces 105 and 12. However, in this case, since the recorder 1 selects the communication network interface 13 to generate a call (step S21 in FIG. 10), the remote control means N receiving the call automatically selects the communication network interface 106.

To select the communication network interface 106 by the remote control means N when the remote controller 100 generates a call, the user changes the place of use from "inside of room" to "outside of room" in advance. That is, the place of use from "inside of room" to "outside of room" can be freely changed only by displaying the screen shown in FIG. 8.

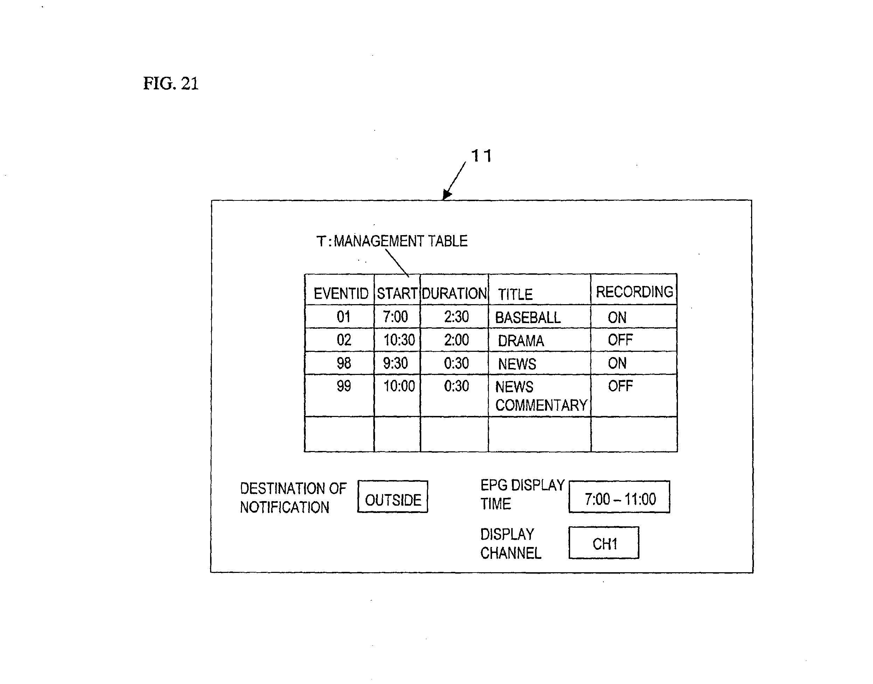

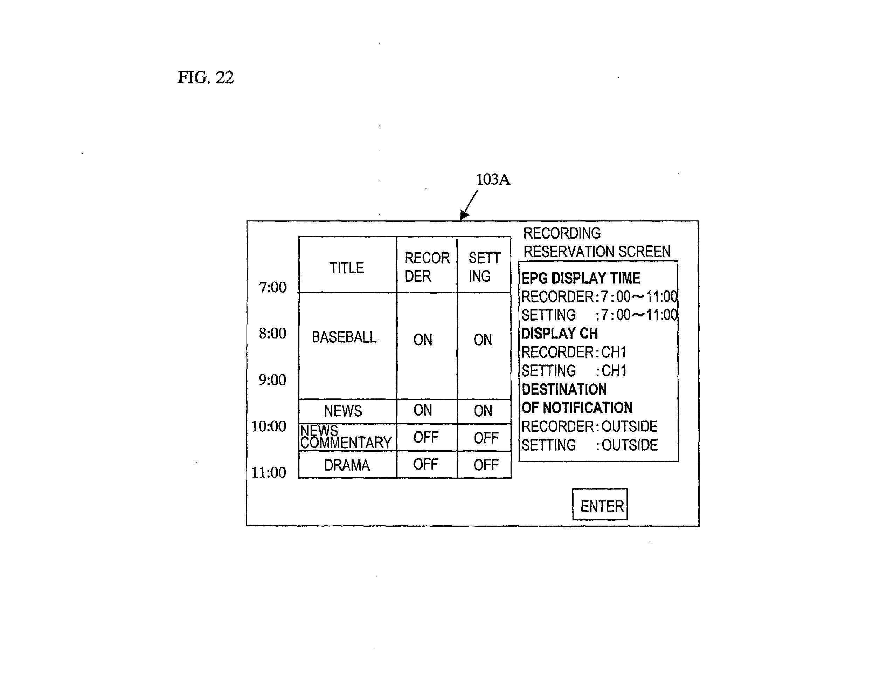

When the recording control means M which has received the recording setting command changes the contents of the management table T shown in FIG. 18 to the contents shown in FIG. 21 and, after that, transmits a notification of completion of setting (steps S23, S24, and S25 of FIG. 10), the recording reservation screen having the contents shown in FIG. 22 is displayed onto the monitor 103A by the remote control means N which has received the notification of completion of setting (steps S114 and S115 in FIG. 9). Thus, the recorder 1 records the baseball game broadcast from 7:00 to 9:30 and the news broadcast onto the HDD 11 from 9:30 to 10:00 on the basis of the remote operation accepted by the remote controller 100.

In such a manner, the recording system can record a program reserved for recording with reliability and also record a program newly additionally broadcast due to a change in the broadcasting schedule with reliability.

Moreover, the user can recognize the program additionally broadcast, and the selecting operation is facilitated as compared with the case of selecting a program to be watched from all of programs to be broadcast.

The user can not only add but also change or cancel the recording reservation by using the input interface 104 of the remote controller 100.

As shown in FIG. 16, ON is set for recording reservation on the recorder 1 side regarding to the baseball broadcast. In the example, the user can cancel the recording reservation for the program. In this case, the user puts the cursor on the setting area regarding to the baseball broadcast in the recording reservation screen, changes the setting from "ON" to "OFF", and then moves the cursor onto the enter button. In the state, the user depresses the selection key K. When the remote control means N detects that, the remote control means N transmits to the recording control means M of the recorder 1 the command including the parameter to show the contents of the cancel. When the recorder 1 receives the command, the recording control means M sets the recording reservation of the recorder 1 side of the information for the baseball broadcast stored in the management table T to OFF on the basis of the parameter included in the command. After that, when the remote controller 100 receives a notification of completion of cancel, the remote control means N sets the recording reservation of the recorder 1 side regarding to the baseball broadcast to OFF also in the recording reservation screen.

In the same way as the cancel of the recording reservation, the user can change the recording start time and the like.

In the above description, when the program is newly added due to the occurrence of the change in the broadcasting schedule, the remote controller 100 is notified of the addition of the program. The recording control means M may automatically reserve for recording or record the program added into the broadcasting schedule. In this case, the recording control means M adds the information for the added programs described in the EIT to the management table T, and absolutely sets the recording reservation state to ON. In this case, since it is possible to reserve for recording or record a program even if the user recognizes the necessity of that, it is preferable that the recorder 1 sends to the remote controller 100 a message that the program added into the broadcasting schedule is reserved for recording or recorded. For example, the recording control means M prepares the list of pieces of information such as title, broadcasting channel, recording start time and recording duration of the program automatically reserved for recording or recorded to output the list to the communication network interface 13. The communication network interface 13 sends the list to the remote controller 1 according to control by the recording control means M. When the remote controller 1 receives the list, the list is displayed on the monitor 103A according to control by the remote control means N. In the case that the user determines that it is necessary to update the reservation information by confirming the list, the recording reservation may be cancelled or changed in the same way as described in the first embodiment.

Further, the recording control means M may automatically reserve for recording only part of the programs. In this case, the user decides the conditions of addition programs automatically reserved for recording by the recording control means M in advance. If a program meeting the conditions is included among the addition programs, the recording control means M adds the information of the addition program to the management table T, and puts the setting of the recoding reservation for the program at ON. The user can decide the conditions such as the conditions that a program is broadcast during a specific time period, the conditions that a program is broadcast on a specific channel and the conditions a program has a specific name as the conditions of addition programs automatically reserved for recording in advance. Since the special program such as disaster reporting and the like is likely important for the user, it is preferable to decide the conditions so as to automatically record the special program.

Further, in the program recording system as described above, there is a possibility that a program to which the user is entirely indifferent is included among addition programs to be notified.

Therefore, the program recording system may comprise addition program selecting means 17, as shown in FIG. 13. The addition program selecting means 17 is also accomplished by executing the programs by the CPU 14.

The addition program selecting means 17 selects a program from programs added into the broadcasting schedule, here on the basis of the recording reservation information.

The recording control means M recognizes that a program is newly added by comparing information of a program stored in the management table T with information of a program included in the EIT which is repeatedly broadcast, and notifies the addition program selecting means 17 of the added program.

When the added program is notified from the recording control means M, the addition program selecting means 17 takes the information of the program of which the setting of the recording reservation is put at ON from the management table T.

The information of the program described in the EIT includes not only the title of the program and broadcasting time but also detailed information such as the cast, genre, outline, andproducer of the program. The addition program selecting means 17 takes out the information.

The addition program selecting means 17 takes the information of the added program also from the updated EIT and compares the information of the added program with the information of the program for which the setting of the recording reservation is put at ON. If there is a relation between the both that coincide with each other and the like, the addition program selecting means 17 selects the added program.

For example, if a performer of a program for which the setting of the recording reservation is put at ON is included in the cast of the added program, the addition program selecting means 17 selects the added program. The case where information of both programs coincides with each other includes not only a case where the information of both programs perfectly coincides with each other but also a case where the information coincides partially.

Also, the addition program selecting means 17 may select not only a program for which the setting of the recording reservation is put at ON but also a program from the addition programs on the basis of only recorded program information for the already recorded programs or the both of the recorded program information and the recording reservation information.

The recorded program information is relevant information to the recording reservation regarding to the program already recorded. The recording means 5 records the recorded program information along with the program on the HDD 8A. The recording means 5 may record not only the information of EIT a bit-rate for recording a program, volume spent for recording the program and the like as recorded information on the HDD8A.

The addition program selecting means 17 takes out the recorded program information from the HDD 8A, in a manner similar to the information of a program for which the setting of the recording reservation is put at ON, compares the recorded information with information of an added program.

If recorded program information of a plurality of programs is stored on the HDD 8A, the addition program selecting means 17 can select a program by using statistics of the recorded information of each program.

For example, when a plurality of programs already recorded include a specific number of sports programs and news programs or more, the addition program selecting means 17 may select only the sports programs and news programs.

The addition program selecting means 17 may use only the statistics with respect to information of already recorded programs and select a program on the basis of the statistics and a program for which the setting of the recording reservation is put at ON.

If a news program is notified as an addition program in a state where a specific number of sports programs and news programs are included in a plurality of programs already recorded and the setting of the recording reservation for sports program is ON, even when the setting of the recording reservation for the news program is not ON, the addition program selecting means 17 selects the new news program.

The program selected in such a manner is given from the addition program selecting means 17 to the program notifying means 16. The program notifying means 16 notifies the remote controller 100 of only the selected program as the program added into the broadcasting schedule.

Thus, the notification screen showing only the selected program is displayed on the monitor 103A of the remote controller 100. Because the interest of the user is naturally reflected in the selected program, in this case, the user has no need of burdensome registrations for narrowing the notified programs.

Further, if the recording reservation information and the recorded program information is stored in a nonvolatile memory that the remote controller 100 has built-in or a removable memory card, the remote controller 100, instead of the addition program selecting means 17, can select a program from added programs on the basis of the stored information.

### Third Embodiment

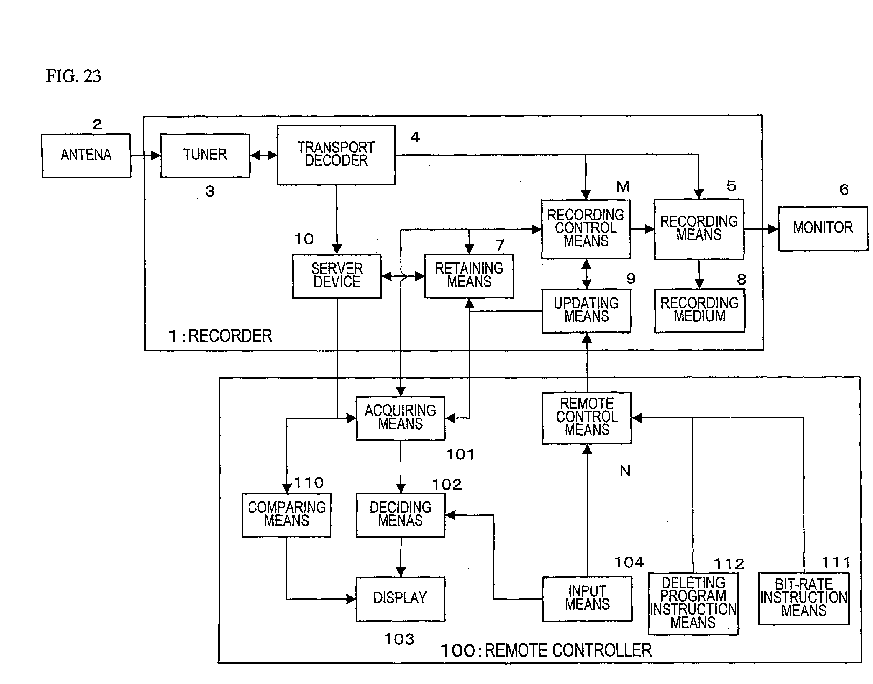

In the case that the recording reservation of the program is added as described above, the recording medium 8 on which the program is recorded is not always left for the program of which the recording reservation is added. Therefore, the remote controller 100 in this embodiment, as shown in FIG. 23, comprises comparing means 110. The comparing means 110 compares recording volume needed for recording a program to be additionally reserved for recording with remaining volume of a recording medium on which a program is recorded, and shows a result of a comparison on the display 103.

In this embodiment, the recording control means M manages the remaining volume of the recording medium 8. The remaining medium is given by subtraction of a volume (hereinafter, called "recorded volume") of area on which a program is recorded and a volume (hereinafter, called "reserved volume") spent for recording a program already reserved for recording from the whole volume of the recording medium 8. Here, it is supposed that the reserved volume is 2.8 Gbytes and the remaining volume is 10.1 Gbytes. The recording control means M sends information showing the remaining volume of the recording medium 8 at the time of sending the recording reservation information to the remote controller 100.

When the remote controller 100 receives the information, the comparing means 110 takes from the remote control means N the recording time and the recording bit-rate of the program to be additionally reserved for recording.

In the case that the recording time of the program is two hours and the recording bit-rate is 9.2 Mbps (1024M = 1G) , the volume spent for recording the program is about 8.1 Gbytes. The comparing means 110 compares the volume with the received volume to show a difference between the both as a result of a comparison on the display 103.

In this case, since the difference between the both is 2.0Gbytes, the volume of the recording medium 8 is left even if all programs reserved for recording, which includes programs to be additionally reserved for recording, are recorded. The user can easily know whether the volume of the recording medium 8 is left or not by confirming the display of the result of comparison.

If the user confirms that the volume of the recording medium 8 is left, the user will give the remote controller 100 instructions to update the recording reservation information. The remote controller 100 sends an update request to the recorder 1 according to the instructions of the user. When the recorder 1 receives the update request, the updating means 9 adds the recording reservation according to the instructions of the user. The recording control means M adds a volume of the program additionally reserved for recording to the reserved volume, and updates the remaining volume. Since the volume of the program additionally reserved for recording is 8.1 Gbytes in this example, the reserved volume is 10.9 Gbytes. The addition changes the reserved volume from 2.8 Gbytes to 10.9 Gbytes. Therefore, the remaining is updated from the 10.1 Gbytes to 2.0 Gbytes.

The recording control means M subtracts a volume of a recorded program from the reserved volume and adds the volume of the recorded program to the recorded volume, every time a program reserved for recording is actually recorded. As described above, since there is a relation of the remaining volume = the whole volume - the recorded volume - the reserved volume, The recording of the program reserved for recording brings no change of the remaining volume. When all the programs reserved for recording is recorded, the reserved volume is 0 Gbytes.

In this embodiment, if the recorder 1 sends the remaining volume to the remote controller 100, the calculation for which the user confirms the volume can be performed on the side of the remote controller 100. The remote controller 100 may send to the recorder 1 not only the remaining volume but also the volume spent for recording the addition program. In this case, the comparing means 100 does not calculate the volume of the program to be additionally reserved for recording. The comparing means 100 can use the received volume of the addition program as the volume of the program to be additionally reserved for recording. Where there is a plurality of the addition programs, the recording control means M calculates the volume of each program, and the comparing means 110 selects one among those according to the instructions of the user.

It is supposed that the recording reservation for the two hours program is additionally made after all the programs reserved for recording is recorded. If the bit-rate for recording the program is 9.2 Mbps, the remaining volume is 2.0 Gbytes, and the difference when the volume of the program for which the recording reservation is additionally made is subtracted from the remaining volume is -6.1 Gbytes.

In this case, the comparing means 110 shows the difference when he volume of the program for which the recording reservation is additionally made is subtracted from the remaining volume as the result of comparison on the display 103. The comparing means 110 may show a mark such as "ο" and "x" representing whether the volume of the recording medium 8 is left of not instead of the calculation result as the result of comparison on the display 103.

The user can easily know whether the volume of the recording medium 8 is insufficient for recording the program to be additionally reserved for recording.

In the case that the result of comparison shows that the volume is insufficient, in order to record the whole part of the program to be additionally reserved for recording, it is necessary to increase the volume of the recording medium or to decrease the volume spent for recording the program.

Therefore, the program recording system comprises bit-rate instruction means 111 and deleting instruction means 112. The user can decrease the volume to be spent to the remaining volume or less by reducing the volume spent for recording the program to be additionally reserved for recording with the bit-rate instruction means 111. For example, when the recording bit-rate is changed from 9.2 Mbps to 4.0 Mbps by using the bit-rate instruction means 111, the volume spent for recording the program to be additionally reserved for recording is 3.5 Gbytes. Therefore, if the program is recorded at the bit-rate, the remaining volume is -1.5 Gbytes. If the user confirming that decrease the setting value of the recording bit-rate to 2.0 Mbps, the volume spent for recording the program to be additionally reserved for recording is 1.8 Gbytes. When the program is recorded at the bit-rate, the remaining volume is 0.2 Gbytes. The user can adjust the recording bit-rate so as to record all of the programs additionally reserved for recording by confirming the display of the result of comparison.

When the remote control means N requests for updating the recording reservation of the corresponding program, the bit-rate adjusted as described above is included in the request for the updating. The recording means 5 has not only AV decoder but also AV encoder and makes a recording at the recording bit-rate included in the updated recording reservation according to the control of the recording control means M. Thus, even if, when the recording reservation is additionally made, the volume of the recording medium is insufficient for recording the program additionally reserved for recording, all of the programs can be recorded.

The user can obtain the volume spent for recording the program to be additionally reserved for recording on the recording medium by deleting the recorded program with the deleting instruction means 112.

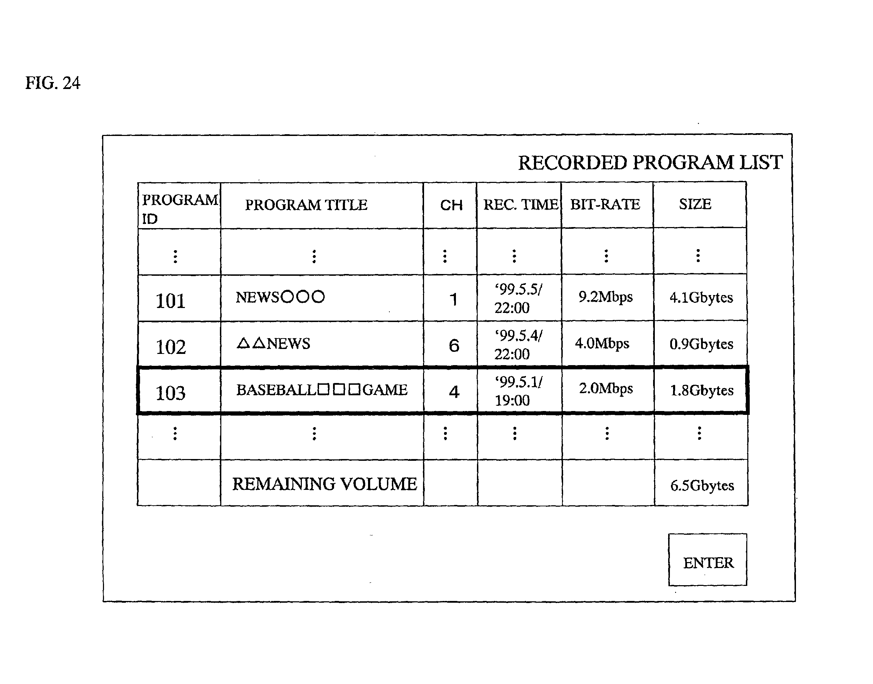

In this embodiment, information of all of the programs that the user gives instructions of recording is transmitted along with the recording reservation information to the remote controller 100 from the recorder 1. When the user deletes a recorded program, for example, the list of recorded programs including information such as recording time, size, recording bit-rate is shown on the display 103, as shown in FIG. 24.

The remaining volume is shown on the list of the recorded program. In this example, the remaining volume of the recording medium 8 is 6.5 Gbytes, and the volume spent for recording the program to be additionally reserved for recording is 8.1 Gbytes. Accordingly, the volume is insufficient. When the volume is insufficient, the user can select an expendable program from the recorded programs by using the deleting instruction means 112 and delete the selectedprogram. In this embodiment, the user selects the program with the program ID of "103". When the program is selected, the remote controller 100 requests for deleting the selected recorded program. If the recorder 1 receives the request, the corresponding program is deleted from the recording medium 8. As the result of that, the remaining volume of the recording medium 8 is 8.3 Gbytes. Therefore, all of the programs to be additionally reserved for recording can be recorded.

By the way, in the above description, the programs the programs to be subjects of deleting, which are included in the list of the recorded programs, are basically all of the programs which the user gives instructions of recording. That is because the user usually has no right to delete the recorded program of others. The recording control means M may specify the program to be a subject of deleting on the basis of a user ID appended to information of each program and a deleting permission flag appended to a program that permission to delete is given in advance. For example, where a memory card storing a user ID is inserted in the remote controller 100, the recording control means M extracts from the recorded programs only the programs corresponding to the ID received from the remote controller 100.

When the volume of the recording medium becomes insufficient due to a new recording reservation for a program, if the recording control means M automatically and properly deletes a program already recorded on the recording medium, the insufficiency of the volume will be solved.

In this case, the recording control means M determines whether a program recorded on a recording medium is deleted or not on the basis of recording time of a program reserved for recording, a recording bit rate for recording the program, and the remaining volume of the recording medium on which the program reserved for recording is to be recorded.

The determination of the deletion is done in the case where the recorder 1 receives a request for recording reservation from the remote controller 100.

In the example of FIG. 10, it is assumed that the user changes the setting of the recording reservation of drama from "OFF" to "ON" to add a recording reservation for the drama by using the input interface 104A of the remote controller 100.

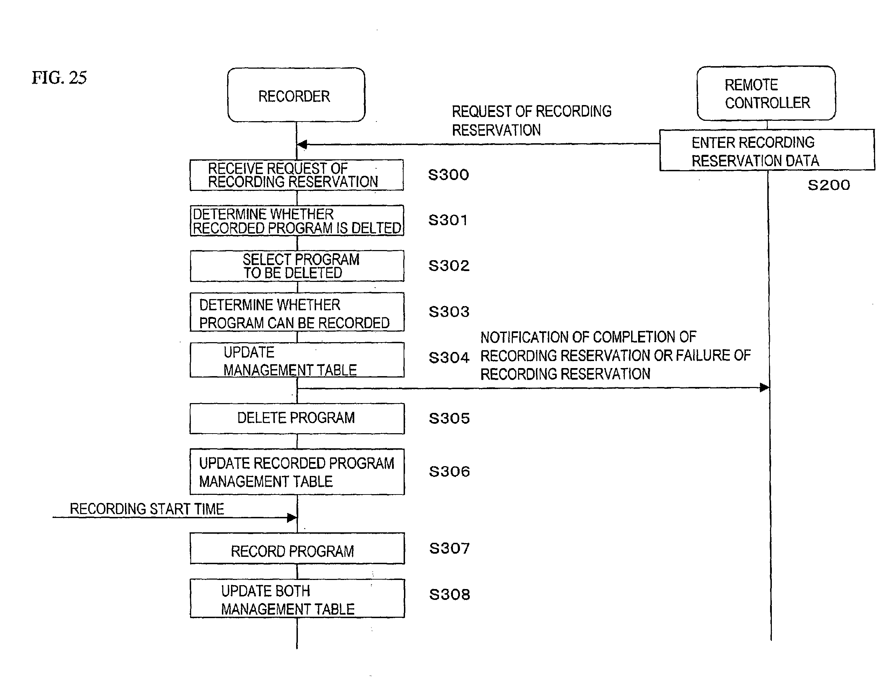

When the data of the recording reservation is input by the user (S200 in FIG. 25) and the remote control means N detects the input operation, the remote control means N transmits a command to request for recording reservation which includes a parameter indicative of addition of the recording reservation to the recorder 1 by using the infrared interface 105 or the communication network interface 106.

When the recorder 1 receives the command (S300 in FIG. 25), the recording control means M obtains recording time of the program to be additionally reserved for recording from the parameter included in the command. Further, the recording control means M obtains the setting of the present recording bit-rate and the remaining volume of the HDD 8A. The recording control means M calculates, for example, the volume spent for recording the program on the basis of the recording time of the program additionally reserved for recording and the setting of the recording bit-rate, and compares the spent volume with the remaining volume of the HDD 8A. On the basis of the result of comparison, the recording control means M determines whether the program recorded on the HDD 8A is to be deleted or not (S301 in FIG. 25).

In the case where the spent volume is larger than the remaining volume of the HDD 8A, the result of determination expresses that the program recorded on the HDD 8A is to be deleted. When the spent volume is equal to or smaller than the remaining volume of the HDD 8A, the result of determination expresses that the program recorded on the HDD 8A is not deleted.

In the case where the result of determination expresses that the program recorded on the recording medium is to be deleted, a program to be deleted is selected from programs recorded on the recording medium on the basis of predetermined conditions (S302 in FIG. 25).

The predetermined condition is such that the program to be deleted is a program of which recording timing is the oldest among programs that the permission to delete is given.

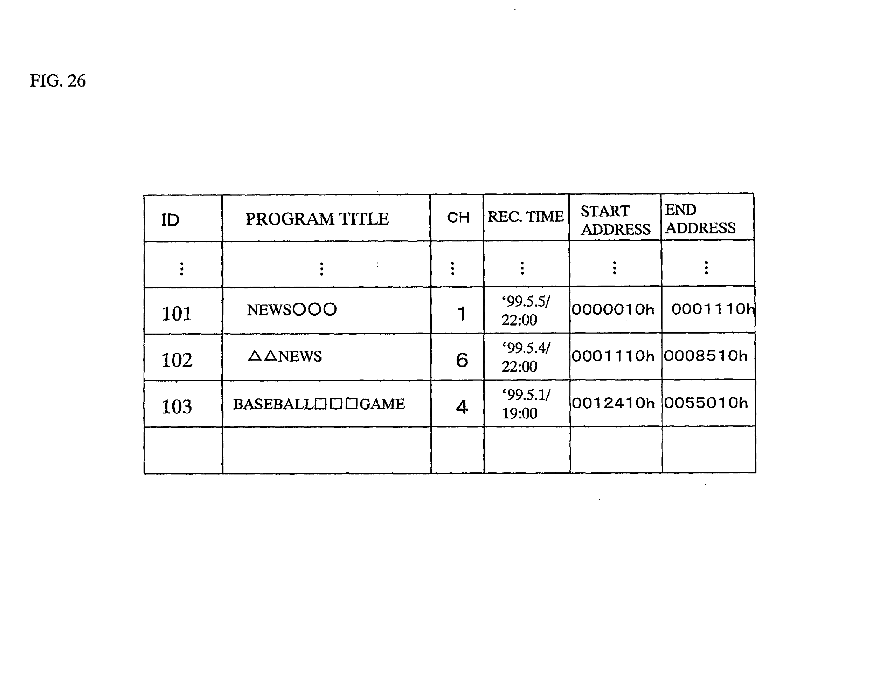

To select a program to be deleted, the recording control means M refers to a recorded program management table. The recorded program management table includes, for example as shown in FIG. 26, the ID of a program, program title, channel, recording date and time, start address, and end address.

In the example of FIG. 26, "baseball □□□ game" is the program of which recording timing is the oldest, the recording control means M selects the recorded program as a program to be deleted, and calculates the volume occupied by the recorded program in the HDD 8A on the basis of the start and end addresses.

The recording control means M adds the notified occupied volume and the remaining volume of the HDD 8A to calculate the remaining volume after deletion of the selected deletion program. The recording control means M compares the remaining volume after deletion with the volume spent for the program to be reserved for recording, and determines whether the program is to be deleted or not on the basis of the result of comparison. The procedures performed by the recording control means M are repeated until the result of determination indicates that a program recorded on the HDD 8A is not deleted.

In the case where the remaining volume after deletion is smaller than the volume spent for programs to be reserved for recording though all the recorded programs that permission to delete is given are selected as the deletion programs by repeating such procedures, the recording control means M determines that the program to be reserved for recording cannot be recorded. On the other hand, when the remaining volume after deletion becomes equal to or larger than the volume spent for the program to be reserved for recording, the recording control means M determines that the program to be reserved for recording can be recorded.

Whether the recording of the program to be reserved for recording is possible or impossible is determined (S303 in FIG. 25). If it is determined that the program to be reserved for recording can be recorded, the recording control means M updates the management table T (S304 in FIG. 25), adds the information of the program into the management table T, and puts the setting of the recording reservation of the information at ON.

After the management table T is updated or when it is determined that the program which is requested to reserve for recording cannot be recorded, the recording control means M transmits a notification of completion of recording reservation or a notification indicating that the program cannot be reserved for recording to the remote controller 100 by using the infrared interface 12 or communication network interface 13.

Preferably, the selected program to be deleted is actually deleted just before the recording start time of the program reserved for recording after the recording reservation completion is notified.

This is to avoid a situation such that, in the case where the user cancels the recording reservation, the program to be deleted has been already deleted.

On deletion of the program to be deleted just before the recording start time (S305 in FIG. 25), the recording control means M updates the recorded program management table stored according to the deletion (S306 in FIG. 25).

And when the present time becomes the recording start time, the recording control means M starts recording the program reserved for recording in accordance with information of the program stored in management table and the like (S307 in FIG. 25).

After completion of recording of the program reserved for recording, the recording control means M deletes the information of the program which has been just recorded from the management table T and adds information corresponding to the information into the recorded program management table (S308 in FIG. 25).

### Fourth Embodiment

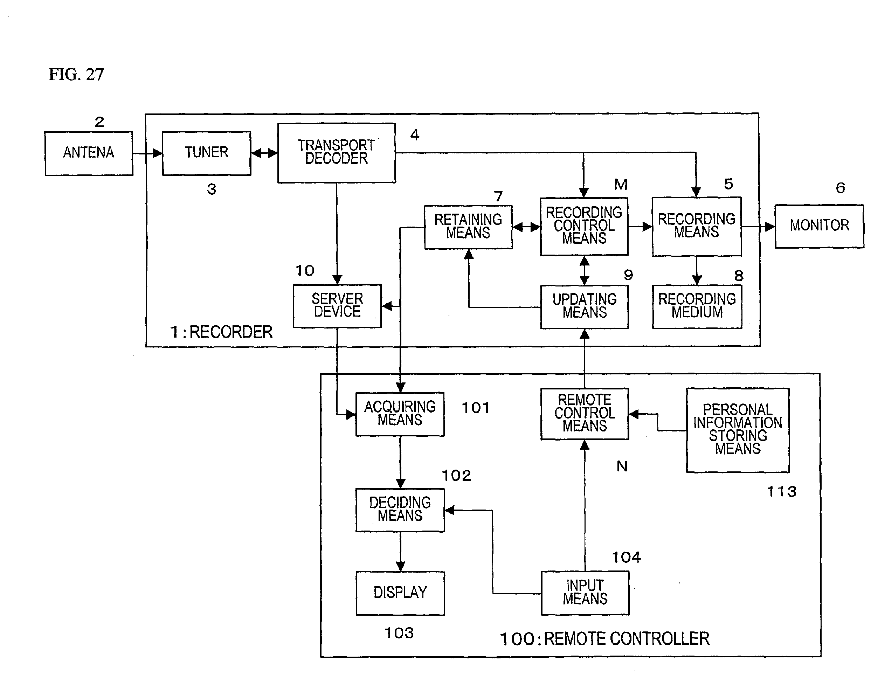

In this embodiment, the remote controller 100 of the program recording system is provided with personal information storing means 113, as shown in FIG. 27. At the time of requesting for the updating, the remote control means N reads personal information to specify a user from the personal information storing means 113, and includes the personal information in the request for the updating. The personal information to specify a user may be a telephone number of a mobile telephone or an ID unique to a user.

If the recorder 1 receives the update request including such personal information, the updated recording reservation and the personal information can be managed so as to be associated with each other, and reproduction display of the recorded program and the marked image can be controlled on the basis of the personal information.

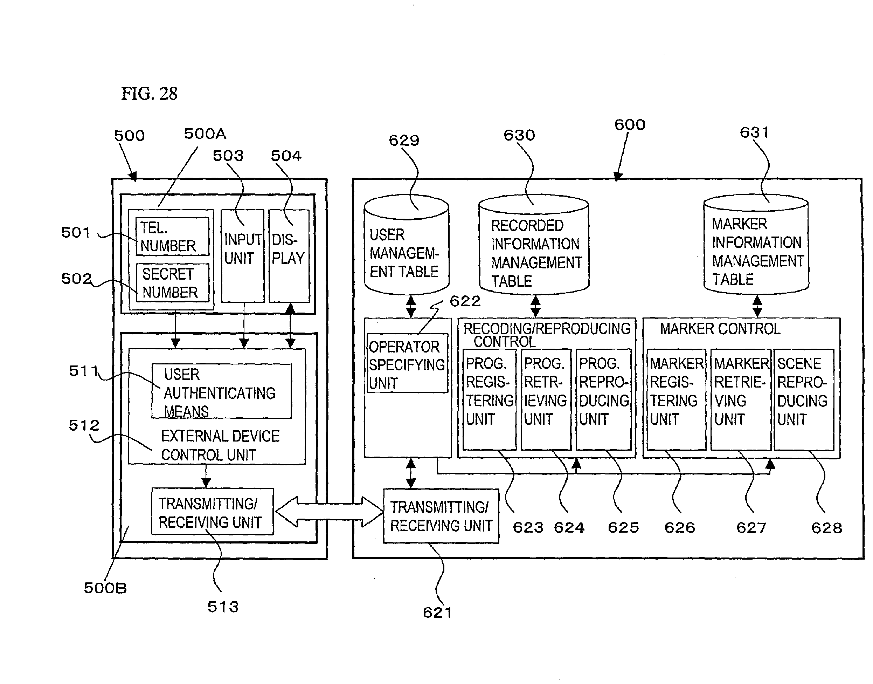

The reproduction display control will be explained hereinafter on a recording/reproducing system shown in FIG. 28. The recording/reproducing system is constructed by a mobile telephone 500 and a recording/reproducing apparatus 600. The mobile telephone 500 of the recording/reproducing system corresponds to the remote controller 100 of the program recording system, and the recording/reproducing apparatus 600 corresponds to the recorder 1.

The mobile telephone 500 is constructed by a telephone function part 500A and a remote controller function part 600A. In the telephone function part 500A, a telephone number storing unit 501 stores a telephone number of the mobile telephone 500. A secret number storing unit 502 stores a secret number of the mobile telephone 500. An input unit 503 is used to operate the mobile telephone 500. A display 504 displays information to control the recording/reproducing apparatus 600. In the remote controller function part 500B, a user authenticating means 511 identifies the person who is operating the mobile telephone 500. An external device control unit 512 controls an external device from the mobile telephone 500. A transmitting/receiving unit 513 transmits/receives a command for controlling an external device.

In the recording/reproducing apparatus 600, a transmitting/receiving unit 621 transmits/receives a command to/from the mobile telephone 500. An operator specifying unit 622 specifies the operator of the recording/reproducing apparatus 600 through the mobile telephone 500, on the basis of the telephone number and the secret number sent from the mobile telephone 500. A program registering unit 623 records the person who performs a recording operation into a recording information management table. A program retrieving unit 624 retrieves a program recorded by a person who performed a reproducing operation. A marker registering unit 626 records a person who performs a marker registering operation into a marker information management table. A marker retrieving unit 627 retrieves a video image marked by the person who performed a marking operation. A scene reproducing unit 628 reproduces a scene selected by a person who performed a marked image reproducing operation.

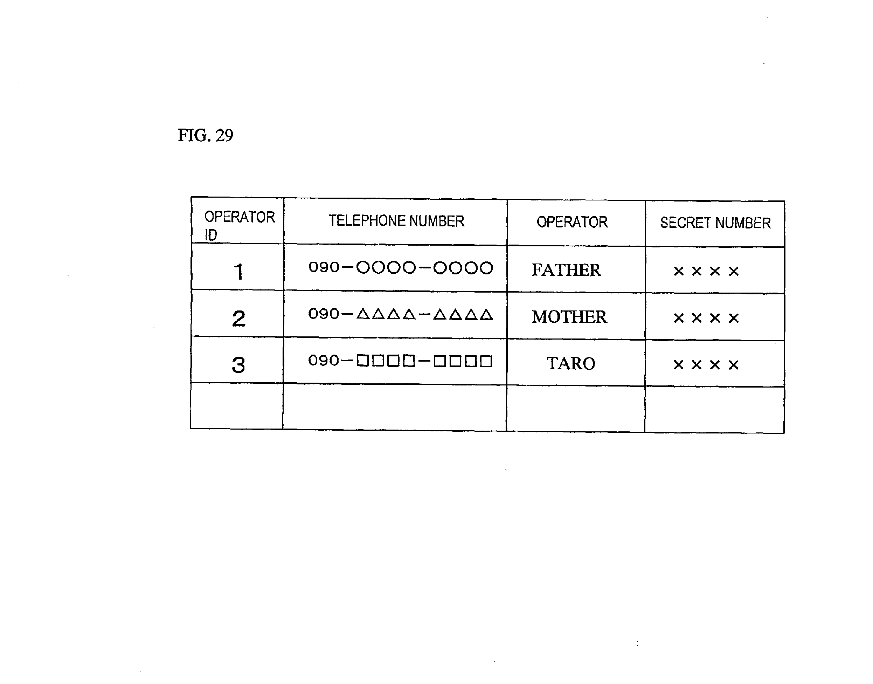

In a user management table 629 of the recording/reproducing apparatus 600, information of a person who performs operation by using the mobile telephone 500 is preliminarily registered in a format shown in FIG. 29.

As shown in FIG. 29, the user management table 629 is constructed by the telephone number of the mobile telephone 500 of the user, the secret number, user' s name, and user's ID.

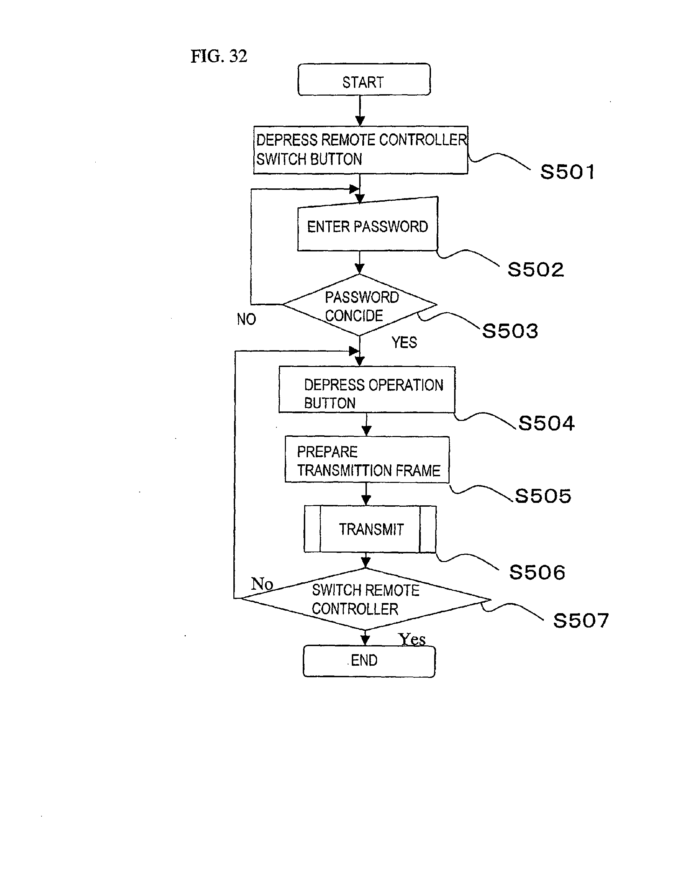

The user performs an operation of recording a program to the recording/reproducing apparatus 600 by using the mobile telephone 500. The procedures in this case are shown in FIG. 32.

When the user depresses remote controller switching button of the mobile telephone 500 (S501), a password input screen is displayed, and the user enters his/her password (S502). Password inputting operation is repeated until the input password coincides with the secret number stored in the secret number storing unit 502 (S503).

After the input password coincides with the secret number stored in the secret number storing unit 502, when the user depresses a recording correspondence button of the mobile telephone 500 (S504), the mobile telephone 500 prepares a transmission command for instructing the recording/reproducing apparatus 600 to start recording operation (S505), and the command is transmitted from the transmitting/receiving unit 513 in the mobile telephone 500 to the recording/reproducing apparatus 600.

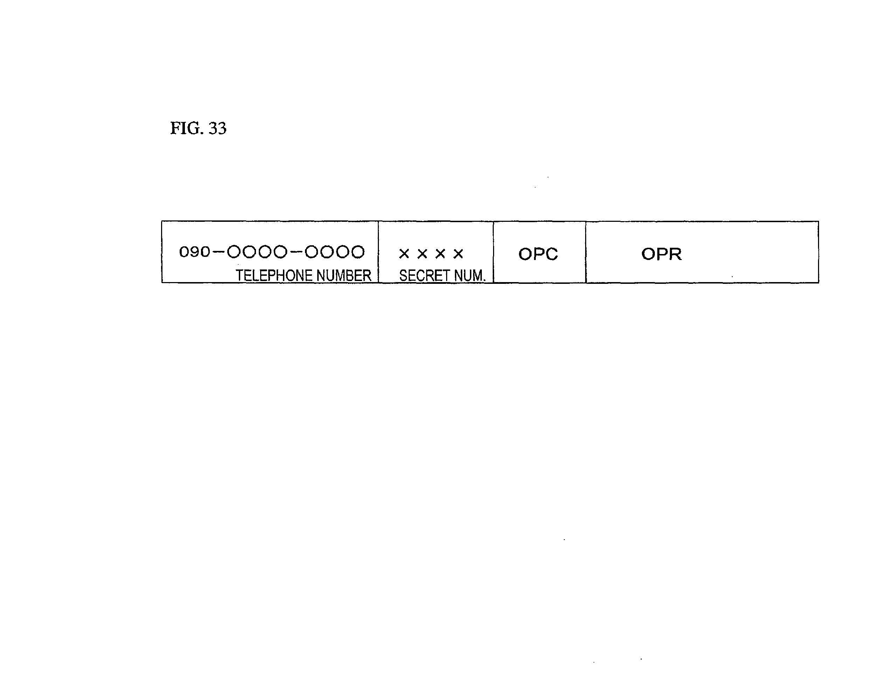

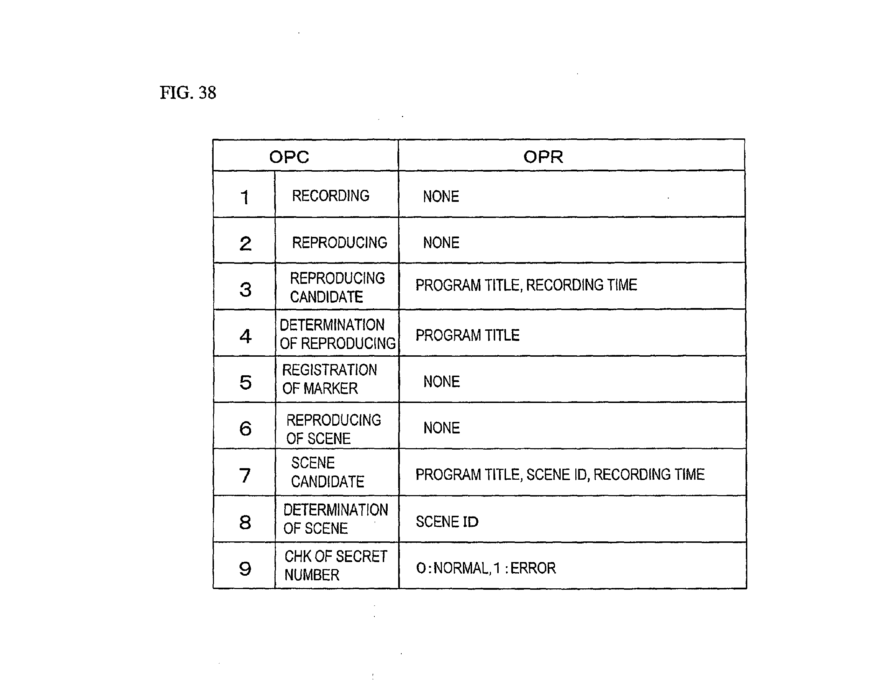

The control command transferred between the mobile telephone 500 and the recording/reproducing apparatus 600 includes, for example, as shown in FIG. 33, a telephone number, a secret number, an operation code (OPC), and an operand OPR. FIG. 38 shows a list of the OPCs and OPRs. In the case of a command for instructing start of recording, "1" is set in the OPC of the command.

When the transmitting/receiving unit 621 of the recording/reproducing apparatus 600 receives the transmission command sent from the mobile telephone 500, the operator specifying unit 622 searches the user management table 629 in FIG. 29 on the basis of the telephone number in the received command. As a result of the search, if the secrete number of the operator ID in the user management table 629 coincides with the received secret number, the operator specifying unit 622 notifies the program registering unit 623 of a recording start command. In this case, the recording/reproducing apparatus 600 sets "0 (authenticated)" in the operand of the transmission command (OPC = 9) in FIG. 33, and transmits the command from the transmitting/receiving unit 621 to the mobile telephone 500.

If the secret number of the user management table 629 and the received secret number are different from each other, the recording/reproducing apparatus 600 sets "1 (not authenticated)" in the operand of the transmission command (OPC = 9) in FIG. 33 and transmits the command from the transmitting/receiving unit 621 to the mobile telephone 500.

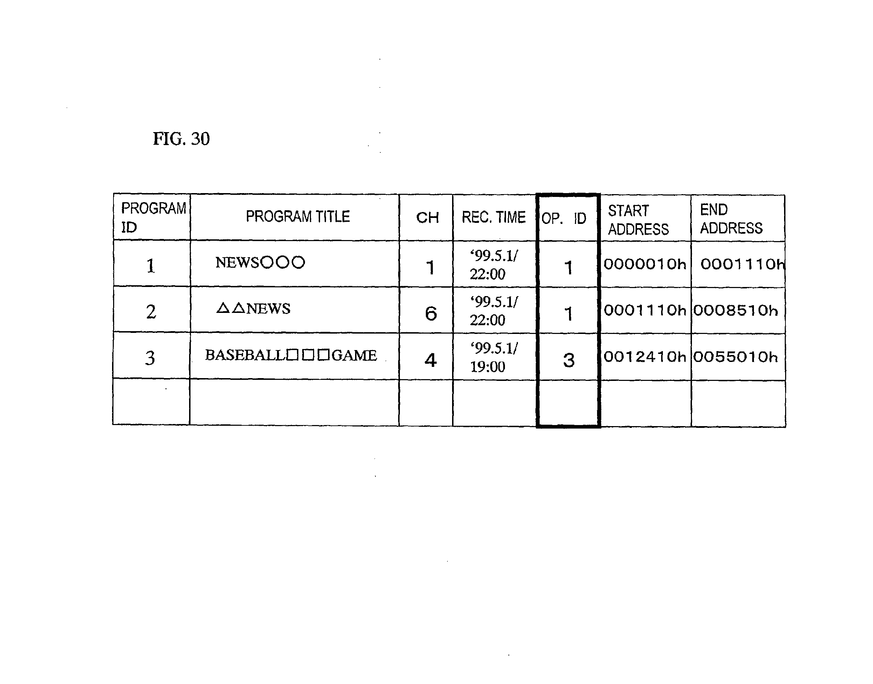

On receipt of the recording start instruction, the program registering unit 623 sets the title of a program to be recorded, channel, and recording date and time in a recorded information management table 630 in FIG. 30, and sets the user ID specified in the user management table 29 in FIG. 29 as the operator ID. Further, the recording start position is set in the start address, and recording of the program is started.

After the program is recorded in such a manner, the user can allow the recording/reproducing apparatus 600 to reproduce the recorded program by using the mobile telephone 500.

In a fashion similar to the case of recording, when the user depresses the remote controller switching button of the mobile telephone 500 (S501), the password input screen is displayed, and the user enters his/her password (S502). The password inputting operation is repeated until the input password coincides with the secret number stored in the secret number storing unit 502 (S503). After the input password coincides with the secret number, when the user depresses the reproduction correspondence button of the mobile telephone 500 (S504), the mobile telephone 500 generates a transmission command (OPC = 2) shown in FIG. 32, for instructing the recording/reproducing apparatus 600 to start reproduction (S505), and transmits the command from the transmitting/receiving unit 513 of the mobile telephone 500 to the recording/reproducing apparatus 600.

When the transmitting/receiving unit 621 of the recording/reproducing apparatus 600 receives the transmission command sent from the mobile telephone 500, the operator specifying unit 622 searches the user management table 629 of FIG. 29 on the basis of the telephone number in the command received. If the secret number of the operator ID in the user management table 629 coincides with the received secret number as a result of search, the operator specifying unit 622 notifies the program retrieving unit 624 of a reproduction command, and the recording/reproducing apparatus sets "0 (authenticated)" in the operand of the transmission command (OPC = 9) in FIG. 33, and transmits the command from the transmitting/receiving unit 21 to the mobile telephone 100.

If the secret number of the user management table 629 and the received secret number are different from each other, the recording/reproducing apparatus 600 sets "1 (not authenticated)" in the operand of the transmission command (OPC = 9) in FIG. 33, and transmits the command from the transmitting/receiving unit 621 to the mobile telephone 500.

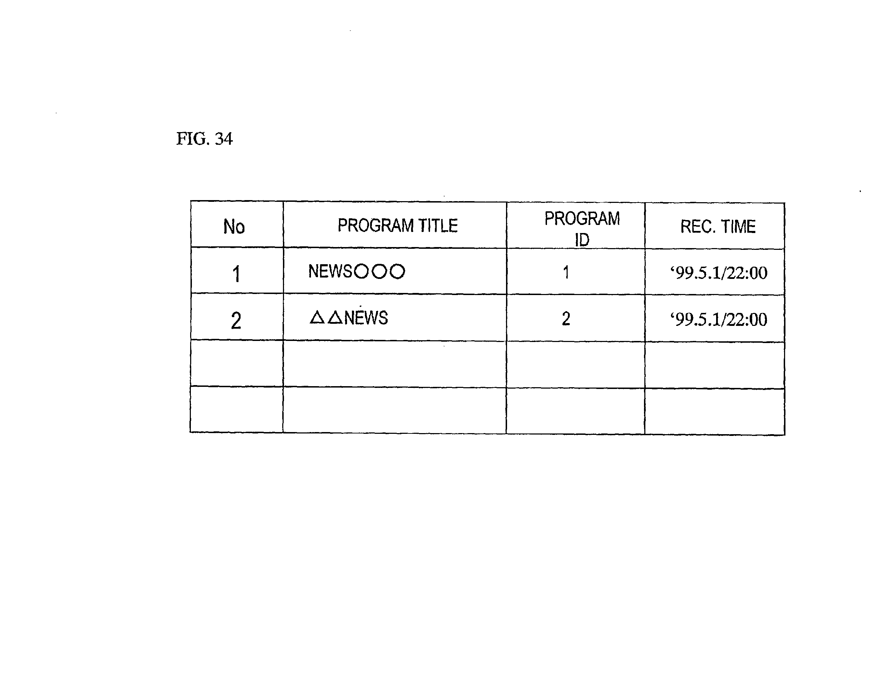

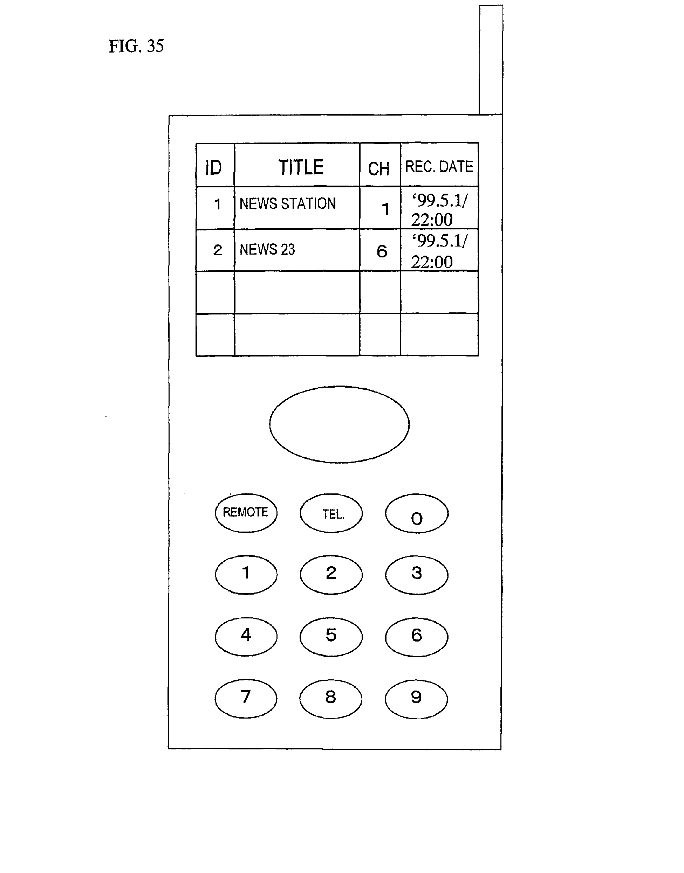

The program retrieving unit 624 searches the recorded information management table 630 in FIG. 30 on the basis of the operator specified by the operator specifying unit 622. The program retrieving unit 624 extracts the title of the program recorded and reproduced by the same operator, and generates a specified operator recording title list table. As shown in FIG. 34, the specified operator recording title list table is constructed by program title, program ID, and recording date and time. After that, the recording/reproducing apparatus prepares a transmission command (OPC = 3) shown in FIG. 33, and transmits it from the transmitting/receiving unit 621 to the mobile telephone 500. When the transmitting/receiving unit 513 of the mobile telephone 500 receives the command, the mobile telephone 500 shows the program title and the recording date and time in the operand onto the display 504 as shown in FIG. 35. When the operator selects a program to be reproduced from the program titles displayed, the mobile telephone500 transmits the selected program ID from the transmitting/receiving unit 513 to the recording/reproducing apparatus 600 (OPC = 4). The transmitting/receiving unit 621 of the recording/reproducing apparatus 600 receives the command transmitted from the mobile telephone 500 and sends the program ID selected for reproduction to a program reproducing unit 625. The program reproducing unit 625 reproduces the program of the title selected from the specified operator recording title list table (FIG. 34).

Operation in the case where the user performs marker registration at the recording/reproducing apparatus 600 by using the mobile telephone 500 will now be described.

When the user depresses a marker registration correspondence button of the mobile telephone 500 during the recording/reproducing apparatus 600 is recording or reproducing a program, the mobile telephone 500 prepares a transmission command (OPC = 5) shown in FIG.33, for instructing the recording/reproducing apparatus 600 to perform marker registration, and transmits the command from the transmitting/receiving unit 513 of the mobile telephone 500 to the recording/reproducing apparatus 600.

The transmitting/receiving unit 621 of the recording/reproducing apparatus 600 receives the transmission command sent from the mobile telephone 500 and notifies the marker registering unit 626 of the marker registration command. The marker registering unit 626 registers information of the relevant scene of the program being reproduced or recorded to the marker management table.

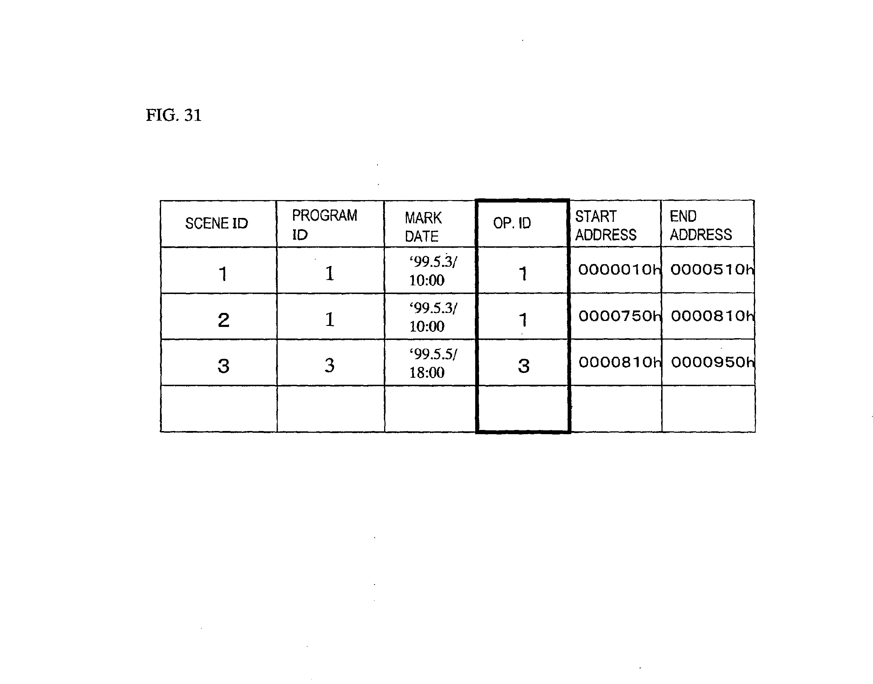

The marker management table includes, as shown in FIG. 31, for example, scene ID, program ID, date and time of marking, operator ID, start address, and end address.

After the marker is registered in such a manner, the user can instruct the recording/reproducing apparatus 600 to reproduce the marked scene by using the mobile telephone 500.

When the user depresses the remote controller switching button of the mobile telephone 500 (S501), the password input screen is displayed, and the user enters his/her password (S502). The password inputting operation is repeated until the input password coincides with the secret number stored in the secret number storing unit 502 (S503). After the input password and the secret number stored in the secret number storing unit 502 coincide with each other, when the user depresses the marker reproduction correspondence button of the mobile telephone 500 (S504), the mobile telephone 500 prepares a transmission command (OPC = 6) shown in FIG. 33 (S5), for instructing the recording/reproducing apparatus 600 to reproduce the marked scene (S505) and transmits the command from the transmitting/receiving unit 513 of the mobile telephone 500 to the recording/reproducing apparatus 600.

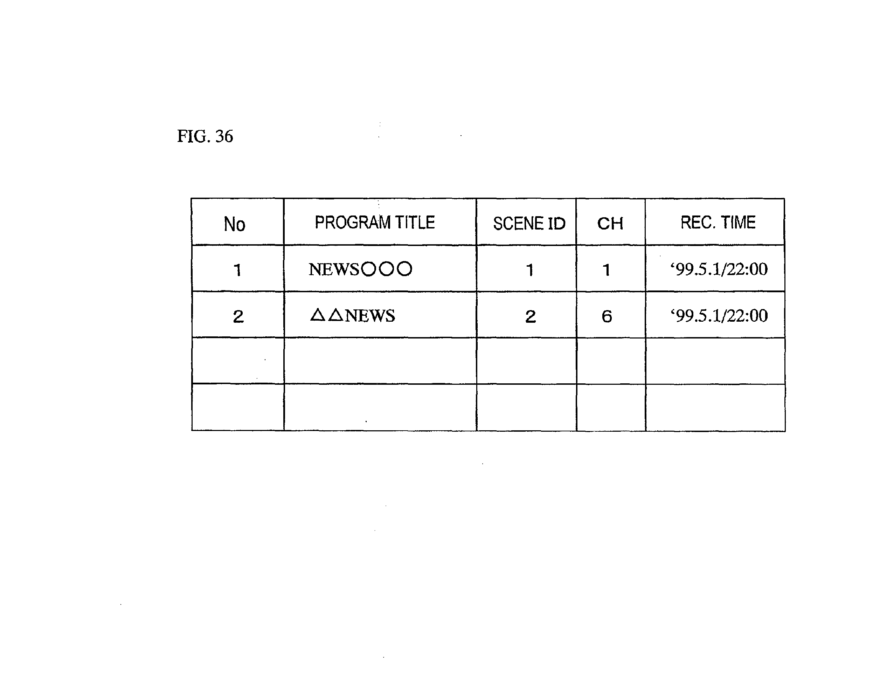

When the transmitting/receiving unit 621 of the recording/reproducing apparatus 600 receives the transmission command sent from the mobile telephone 500, the operator specifying unit 622 searches the user management table 629 of FIG. 29 on the basis of the telephone number in the received command. If the secret number of the operator ID in the user management table 629 coincides with the received secret number as a result of the search, the marker retrieving unit 627 searches the marker information management table 631 of FIG. 31 on the basis of the operator specified by the operator specifying unit 622 to extract the coincided scene. The marker retrieving unit 627 prepares a table of a list of marker registration made by the specified operator of the extracted scene. The specified operator's marker registration list table includes, as shown in FIG. 36, for example, the title, channel, recording date and time, and scene ID. After that, the recording/reproducing apparatus 600 prepares a transmission command (OPC = 7) shown in FIG. 33 and transmits the command from the transmitting/receiving unit 621 to the mobile telephone 500.

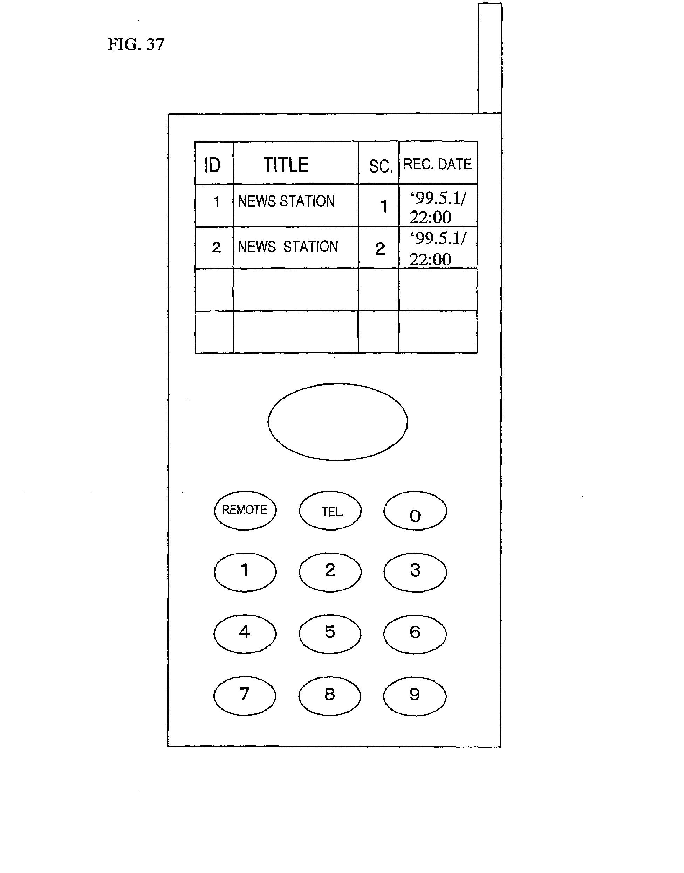

When the transmitting/receiving unit 513 of the mobile telephone 500 receives the command, the potable telephone 500 shows, as shown in FIG. 37, the program title, scene ID, and recording date and time in the operand onto the display 504. When the operator selects a scene to be reproduced from scene information displayed, the mobile telephone 500 transmits the selected scene ID from the transmitting/receiving unit 513 to the recording/reproducing apparatus 600 (OPC = 8). The transmitting/receiving unit 621 of the recording/reproducing apparatus 600 receives the command transmitted from the mobile telephone 500 and sends the scene ID selected to be reproduced to the scene reproducing unit 628. The scene reproducing unit 628 reproduces the selected scene from the specified operator's marker registration list table (FIG. 36).

As described above, in the recording/reproducing system, only a program or scene recorded or registered by the operator is displayed in a list. Also, in the program recording system in the fourth embodiment, the display control is done in the same manner. Even when there are a number of programs or scenes is recorded or registered, selection of a program or scene is facilitated, and it becomes more convenient to the user.

Even in the case where the recording/reproducing apparatus is commonly used by a plurality of people, only programs recorded by the operator himself/herself are displayed in the specified operator's recording title list table, so that privacy or the like is protected among the people sharing the apparatus.

By the way, the recording/reproducing system in this embodiment is accomplished by the program corresponding to the function and the hardware such as a CPU and a memory. For example, when the CPU of the mobile telephone 500 detects depressing the recording correspondence button, the CPU of the mobile telephone 500 gets the transmitting/receiving unit 513 to transmit the user ID according to the program. When the transmitting/receiving unit 621 of the recording/reproducing apparatus 600 receives the user ID, the CPU of the recording/reproducing apparatus 600 registers the user ID in the recorded information management table 630 as the operator ID according to the program. When the CPU of the mobile telephone 500 detects depressing the reproduction correspondence button, the CPU of the mobile telephone 500 gets the transmitting/receiving unit 513 to transmit the user ID according to the program. When the transmitting/receiving unit 621 of the recording/reproducing apparatus 600 receives the user ID, the CPU of the recording/reproducing apparatus 600 searches the recorded information management table 630 on the basis of the user ID and extracts the relevant program. In the case that the recording/reproducing apparatus 600 reproduces the recorded program, the recording/reproducing apparatus 600 extracts the program recorded by the operator of the reproducing and the displays the program.

### Fifth Embodiment

In the embodiment 4, an operator is authenticated on the basis of the telephone number and the secret number. The invention is not limited to that. For example, the IC card having therein a CPU, which is called the UIM (User Identify Module), is used in the third-generation mobile telephone. Usually, the UIM is removably attached to the mobile equipment of the mobile telephone, and stores information of identifying a subscriber, the telephone number and the like. In order to use the mobile equipment as the mobile telephone, the UIM has to be attached to the mobile equipment. Consequently, information of the subscriber stored in the UIM can be used for authentication as user specifying information for specifying a user. The SD (Secure Digital) memory card, which is a memory card with a copyright protection function, also has therein a CPU. And the SD memory card can accomplish functions equivalent to those of the IC card like the UIM by extending its hardware and software. That is, instead of the UIM, the extended SD memory card can be also used for authentication of an operator.

In the case that information of a subscriber stored in such an IC card is used for authentication of an operator, the remote controller 100 of the program recording system does not comprise the personal information storing unit, the IC card is mounted on the remote controller 100 instead. The remote control means N reads the personal information from the IC card, the personal information is included in a request for the updating.

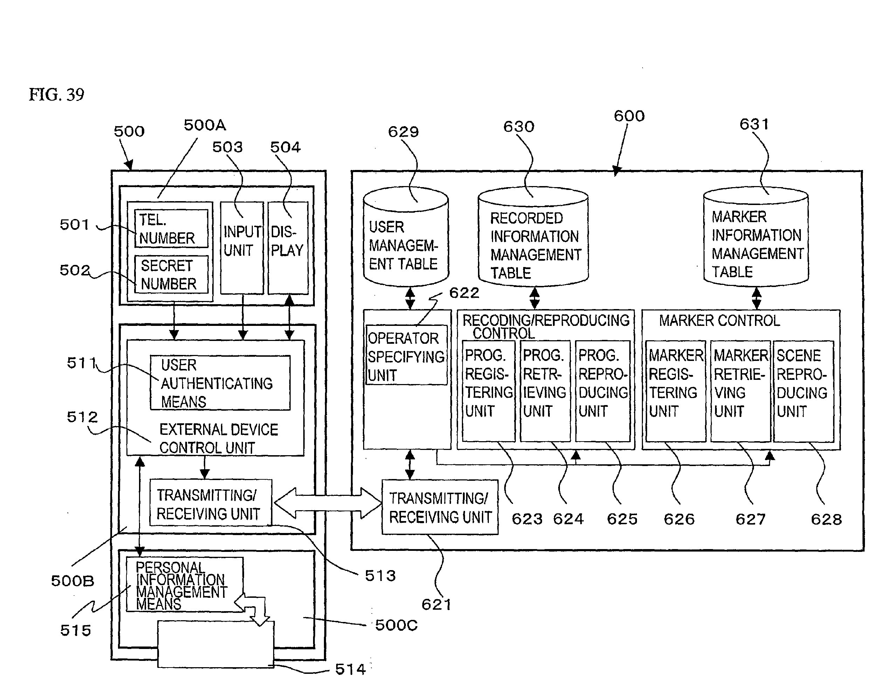

In this case, the recording/reproducing system includes, as shown in FIG. 39, not only components shown in FIG. 28 but also IC card function unit 500C in the mobile telephone 500.

The IC card function unit 500C has personal information management means 515. The personal information management means 515 controls reading from and writing in an IC card 514 removably attached to the IC card function unit 500C and manages the personal information stored in the IC card 514.

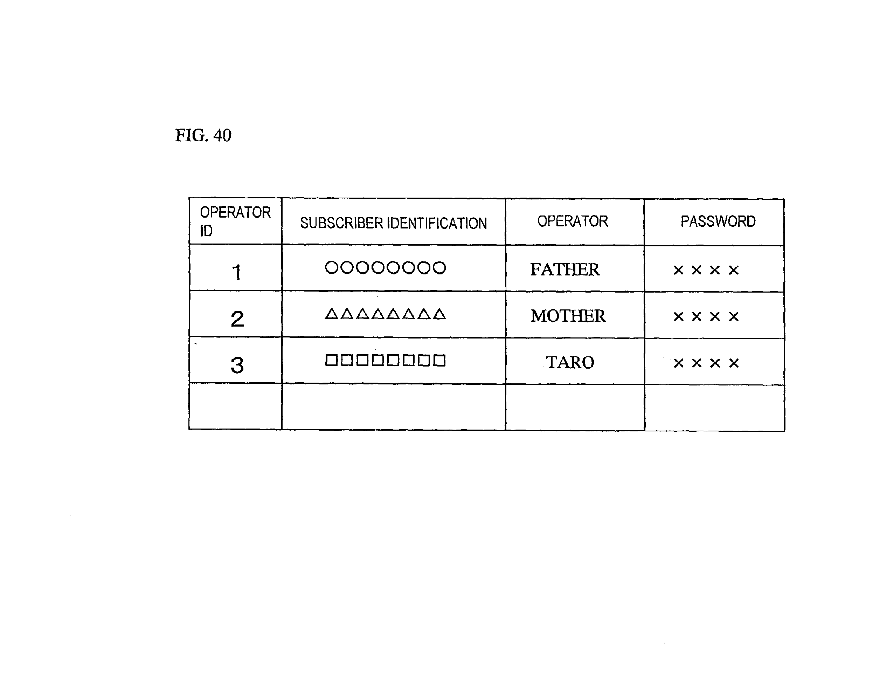

The user management table 629 of the recording/reproducing apparatus 600 stores, as shown in FIG. 40, operator ID, operator name, identification of a subscriber stored in the IC card 514 and password corresponding to it.

When the mobile telephone 500 is used for operating the recording/reproducing apparatus 600 for the first time, the identification and password of a user are sent from the mobile telephone 500 to the recording/reproducing apparatus 600, and are stored in the user management table 629.

The password is used for authentication between a subscriber and the mobile telephone 500. The password is a secret word consisting of characters, symbols, numerals and the like.

Instead of the password, information for biometrics such as a fingerprint and a voiceprint can be also used for authentication between a subscriber and the mobile telephone 500.

When the mobile telephone 500 is used for operating the recording/reproducing apparatus 600 for the first time, a user enters his/her password by using the input unit 503 of the mobile telephone 500. The password is supplied from the input unit 503 to the personal information management means 515. An authorized password is registered in the personal information management means 515 in advance. Only if the registered password and the input password coincide with each other, the personal information management means 515 gives the permission to read the personal information from the IC card 514.

When an authorized password is entered and the identification of the subscriber is read from the IC card 514, the mobile telephone 500 prepares the command to register it and transmits the command to the recording/reproducing apparatus 600 by using the transmitting/receiving unit 513.

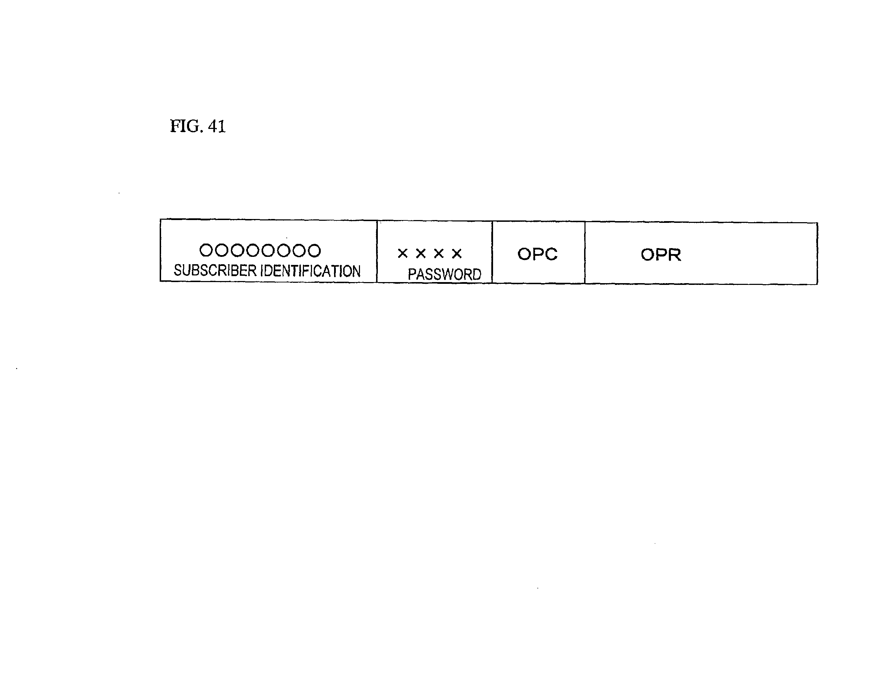

In this embodiment, a control command communicated between the mobile telephone 500 and the recording/reproducing apparatus 600 includes, for example as shown in FIG. 41, subscriber identification, password, OPC and OPR. The OPCs and OPRs are basically similar to those shown in FIG. 38. It is assumed now that "0" is set in the OPC of the command for registering the subscriber identification and password.

When the transmitting/receiving unit 621 of the recording/reproducing apparatus 600 receives the transmission command sent from the mobile telephone 500, the operator specifying unit 622 stores the subscriber identification and password included in the received command in the user management table 629 shown in FIG. 40.

When the subscriber identification and password are registered in the user management table 629 in such a manner, the user can perform operation of the recording/reproducing apparatus 600 by using the mobile telephone 500 to which the IC card 514 is attached.

If the user depresses the remote controller switching button of the mobile telephone 500, the password input screen is displayed, and the user enters his/her password. After the input password coincides with the registered password coincide, when the user depresses a recording correspondence button of the mobile telephone 500, the personal information management means 515 reads the identification of the subscriber from the IC card 514. When the identification of the subscriber is read from the IC card 514, the mobile telephone 500 prepares a command of which "2" is set in the OPC, and transmits the command to the recording/reproducing apparatus 600 from the transmitting/receiving unit 513 of the mobile telephone 500.

When the transmitting/receiving unit 621 of the recording/reproducing apparatus 600 receives the transmission command sent from the mobile telephone 500, the operator specifying unit 622 searches the user management table 629 in FIG. 40 on the basis of the subscriber identification in the received command. As a result of the search, if the password corresponding to the operator ID in the user management table 629 coincides with the received password, the operator specifying unit 622 notifies the program registering unit 623 of a recording start command. In this case, the recording/reproducing apparatus 600 sets "0 (authenticated)" in the operand of the transmission command (OPC = 9) in FIG. 41, and transmits the command from the transmitting/receiving unit 621 to the mobile telephone 500.

If the password of the user management table 629 and the received password are different from each other, the recording/reproducing apparatus 600 sets "1 (not authenticated) " in the operand of the transmission command (OPC = 9) in FIG. 41 and transmits the command from the transmitting/receiving unit 621 to the mobile telephone 500.

On receipt of the recording start instruction, the program registering unit 623 sets the title of a program to be recorded, channel, and recording date and time in a recorded information management table 630 in FIG. 30, and sets the user ID specified in the user management table 29 in FIG. 40 as the operator ID. Further, the recording start position is set in the start address, and recording of the program is started.

If the program is recorded in such a manner, the user can allow the recording/reproducing apparatus 200 to reproduce the recorded program by using the mobile telephone 500 with the IC card 514.

In a manner similar to the case of recording, when the user depresses the remote controller switching button of the mobile telephone 500, the password input screen is displayed, and the user enters his/her password. After the input password coincides with the password registered in the personal information management means 515, when the user depresses the reproduction correspondence button of the mobile telephone 500, the mobile telephone 500 prepares a transmission command (OPC = 2) shown in FIG. 41, for instructing the recording/reproducing apparatus 200 to start reproduction, and transmits the command from the transmitting/receiving unit 513 of the mobile telephone 500 to the recording/reproducing apparatus 600.

When the transmitting/receiving unit 621 of the recording/reproducing apparatus 600 receives the transmission command sent from the mobile telephone 500, the operator specifying unit 622 searches the user management table 629 of FIG. 40 on the basis of the telephone number in the command received. If the password of the operator ID in the user management table 629 coincides with the received password as a result of search, the operator specifying unit 622 notifies the program retrieving unit 624 of a reproduction command, and the recording/reproducing apparatus sets "0 (authenticated)" in the operand of the transmission command (OPC = 9) in FIG. 41, and transmits the command from the transmitting/receiving unit 21 to the mobile telephone 100.

If the password of the user management table 629 and the received password are different from each other, the recording/reproducing apparatus 600 sets "1 (not authenticated)" in the operand of the transmission command (OPC = 9) in FIG. 41, and transmits the command from the transmitting/receiving unit 621 to the mobile telephone 500.

The program retrieving unit 624 searches the recorded information management table 630 in FIG. 30 on the basis of the operator specified by the operator specifying unit 622. The program retrieving unit 624 extracts the title of the program recorded and reproduced by the same operator, and generates a specified operator recording title list table. After that, the recording/reproducing apparatus prepares a transmission command (OPC = 3) shown in FIG. 41, and transmits the command from the transmitting/receiving unit 621 to the mobile telephone 500. When the transmitting/receiving unit 513 of the mobile telephone 500 receives the command, the mobile telephone 500 shows the program title and the recording date and time in the operand onto the display 504 as shown in FIG. 35. When the operator selects a program to be reproduced from the program titles displayed, the mobile telephone500 transmits the selected program ID from the transmitting/receiving unit 513 to the recording/reproducing apparatus 600 (OPC = 4). The transmitting/receiving unit 621 of the recording/reproducing apparatus 600 receives the command transmitted from the mobile telephone 500 and sends the program ID selected for reproduction to a program reproducing unit 625. The program reproducing unit 625 reproduces the program of the title selected from the specified operator recording title list table (FIG. 34).

As described above, in the recording/reproducing system in this embodiment, an operator of the reproduction is specified on the basis of the subscriber identification stored in the IC card, only programs recorded by the operator of the reproduction are displayed. Consequently, even when there are a number of recorded programs, selection of a program is facilitated, and it becomes more convenient to the user. The marker registration can be performed at the recording/reproducing apparatus 600 by using the mobile telephone to which the IC card is attached.

By the way, in a case like that the mobile telephone on which the IC card is removably mounted is used as the external device, the setting attendant on the operation of the recording or the recording reservation by the operator himself/herself may be stored in the nonvolatile memory of the IC card.

The setting information includes program title, channel, recording date and time, recording mode (recording bit-rate), recording duration, marking information, thumbnail of the marked scene and the like.

Consequently, the user can manage the setting attendant on the operation of the recording by himself/herself only with the IC card.

### Sixth Embodiment

In a nonvolatile memory of such a card having therein a CPU, not only the subscriber identification and telephone number but also other personal information such as address, date of birth, and card information of a credit card are often stored.

By adding the personal information stored in the IC card 514 to the command for giving the recording/reproducing apparatus 600

By adding the personal information stored in the IC card 514 to the command for giving the recording/reproducing apparatus 600 instructions according to an operation on the mobile telephone 500, the recording/reproducing apparatus 600 can perform controls on recording and reproduction of a program on the basis of the personal information received from the mobile telephone 500.

For example, in the recording/reproducing system in the fifth embodiment, recorded programs displayed in a list are basically limited to programs recorded by the operator himself/herself, but there is no limitation to which program the operator records.

Even if a minor records a program for adults, since the program is displayed in the specified operator's recording title list table, the minor can watch the program.

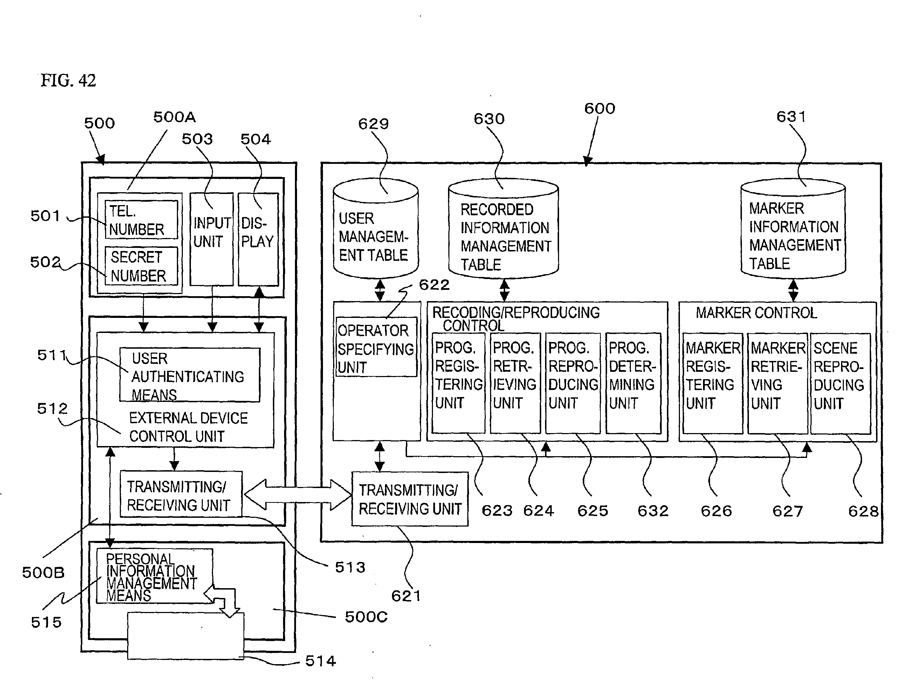

To regulate reproduction of the recorded program, the date of birth of the personal information may be used. In a recording/reproducing system in the sixth embodiment, as shown in FIG. 42, a program determining unit 632 is provided. The program determining unit 632 determines whether the specified operator is a minor or not on the basis of the date of birth.

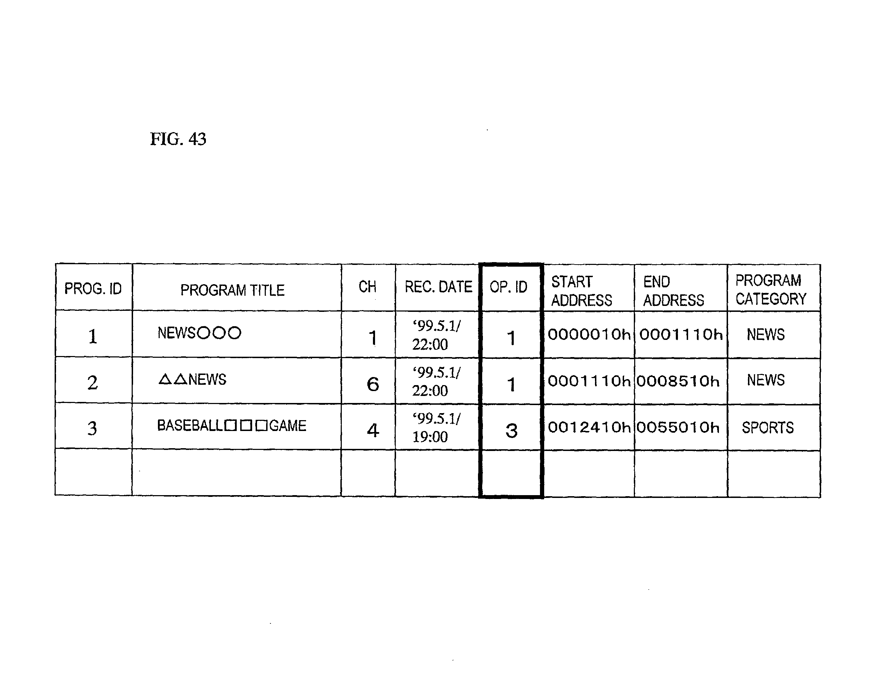

In the recording information management table 630, for example, as shown in FIG. 43, not only the program ID of the recorded program, program title, channel, recording date and time, operator ID, start address, and end address, but also a program category of each recorded program are included. The category of each recorded program is, for example, a genre included in information regarding the program in the EIT. At the time of recording, the category of the program is also stored in the recording information management table 630. When the specified operator is determined as a minor, the program determining unit 632 determines a program belonging to a category which is not permitted to minors among the programs retrieved by the program retrieving unit 624, and notifies the program retrieving unit 624 of the program.

When the use depresses the remote controller switching button of the mobile telephone 500 to reproduce the recorded program by using the recording/reproducing system in the sixth embodiment, the password input screen is shown on the display 504. In the case where the password entered by the user coincides with the password registered in the personal information managing means 515, the personal information managing means 515 reads out the subscriber identification and the date of the birth from the IC card 514. After that, when the user depresses the reproduction correspondence button of the mobile telephone 500, the mobile telephone 500 prepares the transmission command (OPC = 2) shown in FIG.41, for instructing the recording/reproducing apparatus 600 to perform reproduction. In the list shown in FIG. 38, there is no operand in the command for instructing "reproduction." In this case, the date of birth is set in the operand of the command. The mobile telephone 500 transmits the command from the transmitting/receiving unit 513 of the mobile telephone 500 to the recording/reproducing apparatus 600.

When the transmitting/receiving unit 621 of the recording/reproducing apparatus 600 receives the transmission command sent from the mobile telephone 500, the operator specifying unit 622 searches the user management table 629 of FIG. 40 on the basis of the subscriber identification in the command received. If the password of the operator ID in the user management table 629 coincides with the received password as a result of the search, the operator specifying unit 622 notifies the program retrieving unit 624 of the reproduction instruction, and the recording/reproducing apparatus sets "0 (= authenticated)" in the operand of the transmission command (OPC = 9) in FIG. 41 and transmits the command from the transmitting/receiving unit 621 to the mobile telephone 500.

If the password in the user management table 629 and the received password are different from each other, the recording/reproducing apparatus sets "1 (= not authenticated) " in the operand of the transmission command (OPC = 9) in FIG. 41, and transmits the command from the transmitting/receiving unit 621 to the mobile telephone 500.

The program retrieving unit 624 searches the recorded information management table 630 of FIG. 43 on the basis of the operator specified by the operator specifying unit 622. The program determining unit 632 determines whether the specified operator is a minor or not on the basis of the date of birth of the operator in the command received from the mobile telephone 500. If it is determined that the specified operator is not a minor, the program determining unit 632 notifies the program retrieving unit 624 of the result of determination.

In this case, the program retrieving unit 624 extracts titles of all programs recorded and reproduced by the same operator and prepares a specified operator's recording title list table.

On the other hand, if it is determined that the specified operator is a minor, the program determining unit 632 determines a not-permitted program belonging to the category which is not permitted to minors among the programs retrieved by the program retrieving unit 624, and notifies the program retrieving unit 624 of the program. The program retrieving unit 624 extracts the program except for the not-permitted program among the programs recorded and reproduced by the same operator and prepares the specified operator's program title list table.

After that, the recording/reproducing apparatus 600 prepares the transmission command (OPC = 3) shown in FIG. 41 and transmits the command from the transmitting/receiving unit 621 to the mobile telephone 500. When the transmitting/receiving unit 513 of the mobile telephone 500 receives command, the mobile telephone 500 displays the program title and recording date in the operand onto the display 504 as shown in FIG. 35. When the operator selects a program to be reproduced from the program title displayed, the mobile telephone 500 transmits the selected program ID from the transmitting/receiving unit 513 to the recording/reproducing apparatus 600 (OPC = 4). The transmitting/receiving unit 21 of the recording/reproducing apparatus 600 receives the command transmitted from the mobile telephone 500 and transmits the program ID selected to be reproduced to the program reproducing unit 625. The program reproducing unit 625 reproduces the program of the title selected from the specified operator's recording title list table (FIG. 34).

In such a recording/reproducing system, even if the operator who is a minor records a program that is not permitted to minors, the program that is not permitted to minors is eliminated from options of programs the operator wishes to reproduce, the operator cannot reproduce the program. In such a manner, watching of such a program can be regulated.

Although, by regulating reproduction of the recorded program, watching of the program is regulated in the above description, the invention is not limited to that. The recording/reproducing apparatus 600 may regulate recording itself of the program in the case where the operator is a minor.

In the case where, for example, the recording/reproducing apparatus 600 is requested to display the EPG information, the recording/reproducing apparatus 600 may perform a control to select a program for displaying the EPG information.

In this case, when the operator is determined to be a minor, the recording/reproducing apparatus 600 selects a program that is not permitted to minors from the EPG information and does not display the information of the selected program. By the operation, when the operator is a minor, selection of programs to be watched by using the EPG information is regulated.

The limitation on watching of the program can be put without the personal information stored in the IC card 514. A flag shows whether there is limitation or no limitation on watching of the program may be associated with the respective operator IDs of the user management table 629, for example.

In this case, if the flag associated with the operator ID of the operator shows that there is limitation on watching the program, program determining unit 632 determines a program belonging to the specific category among the programs retrieved by the program retrieving unit 624 and notifies the program retrieving unit 624 of the program. The program retrieving unit 624 extracts programs except for the notified program among the programs recorded and reproduced by the same operator and prepares the specified operator title list table.

### Seventh Embodiment

When the addition program selecting means 17 in the second embodiment selects a program from added programs on the basis of not only recording reservation information but also recorded programs, as compared with the case where a program is selected on the basis of a program reserved for recording, the number of programs to be selected is usually larger. Further, in the case where, for example, the recorder 1 is shared by family members, there is the possibility that a program is selected on the basis of programs recorded or reserved for recording by someone else in the family member.

Consequently, like the recording/reproducing systems in the fourth and fifth embodiments, the operator is specified, and based on this, a program may be selected.

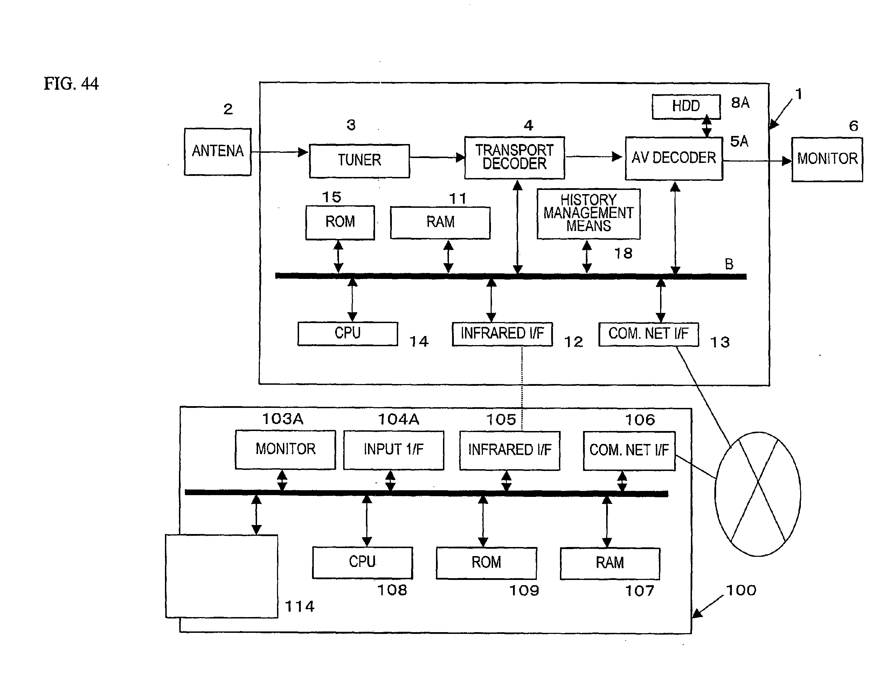

In a recording system in the seventh embodiment, as shown in FIG. 44, the recorder 1 has history management means 18 for managing history of information specifying the operator who performed recording or recording reservation operation.

As the remote controller 100, a mobile telephone to which the IC card 110 storing identification of a subscriber and the like is removably attached is used.

It is now assumed that family members sharing the recorder 1 have mobile telephones of their own and use their mobile telephones as the remote controllers 100. In this case, the subscriber identification stored in the IC card 114 attached to each remote controller 100 is used as the information specifying the operator.

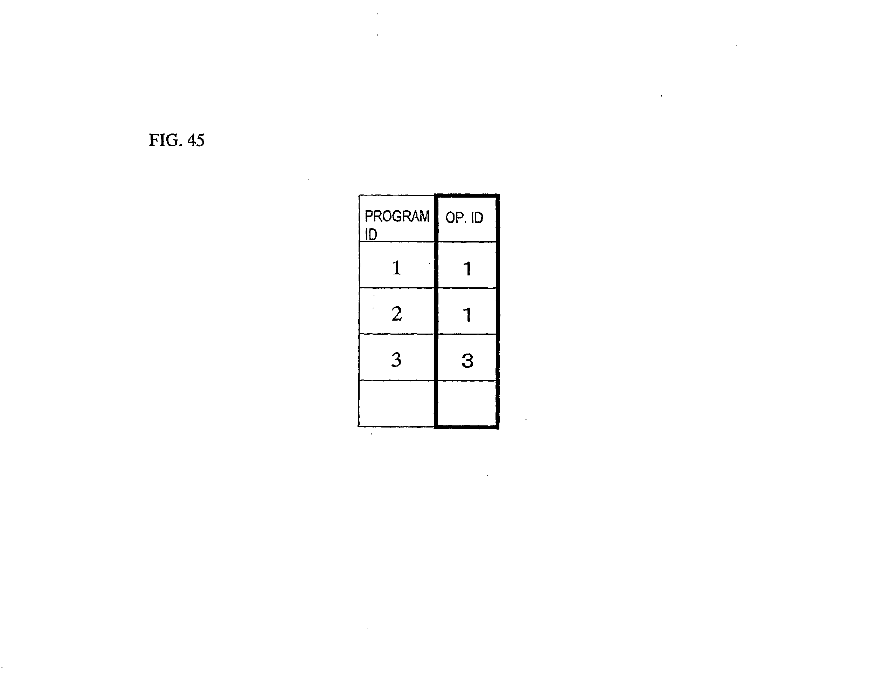

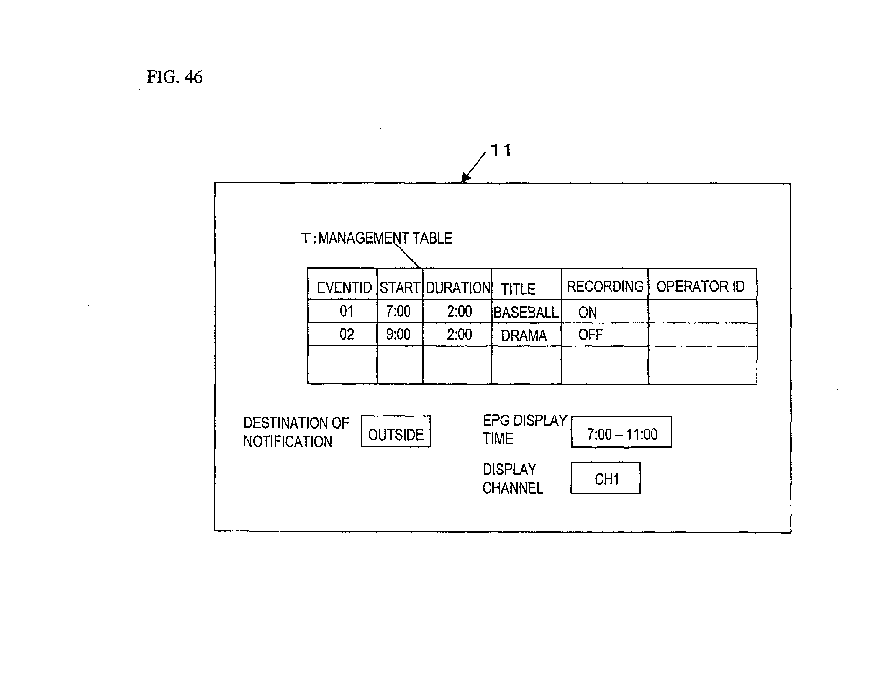

In the recording system, the history management means 18 manages a user management table and a recording operator management table similar to those shown in FIG. 40. The recording operator management table stores, as shown in FIG. 45, the ID of a recorded program and the ID of the operator who performed operation of recording the program are stored so as to be associated with each other. The ID of the program corresponds to the ID of the recorded program. And the ID of the operator and a piece of information of the recorded program are associated with each other via the ID of the program. In a management table T as well, as shown in FIG.46, an operator ID is stored in correspondence with each ID of a program. In the recording operator management table, the ID of an operator who performed recording operation is stored. On the other hand, in the management table T, the operator ID of the operator who performed recording reservation operation is stored.

On the basis of history managed by the history management means 18, the addition program selecting means 17 selects a program from added programs.

When it is recognized that a program is newly added, for example, the addition program selecting means 17 obtains the operator ID associated with a program of which the setting of recording reservation is ON from the management table T. In the example of FIG. 46, the program of which the setting of recording reservation is ON is only the baseball game broadcast, and the operator ID associated with the program is "1." When the operator ID of the program reserved for recording is obtained, the addition program selecting means 17 notifies the history management means 18 of the operator ID. When the operator ID is notified, the history management means 18 obtains the program ID corresponding to the notified operator ID from the recording operator management table. In the example of FIG. 45, the program IDs obtained are "1" and "2." The history management means 18 notifies the addition program selecting means 17 of the obtained program ID. After the program ID is notified, the addition program selecting means 17 obtains only recorded information identified by the program ID. When it is assumed that information corresponding to the recorded information management table shown in FIG. 43 is stored as recorded program information, information of programs obtained by the addition program selecting means 17 is information only for "news οοο" and "ΔΔ news." The addition program selecting means 17 does not obtain information for "baseball xxx game" recorded by another operator.

As a result, the addition program selecting means 17 selects a program from added programs on the basis of only information for three programs of the same operator, that is, a baseball broadcast reserved for recording, "news οοο," and "ΔΔ news".

Consequently, even in the case where the recorder 1 is shared by a plurality of people, the interest of the operator is reflected in the selected program.

As described in the third embodiment, in order to obtain volume for recording the program to be additionally reserved for recording on a recording medium, an operator can delete a program recorded on the recording medium.

In the case where the recorder 1 is shared by a plurality of people, a list of recorded programs includes not only a program which an operator performs an operation of recording by himself/herself but also a program which another operator performs an operation of recording.

It is difficult for an operator to decide whether a program which the operator performs no operation of recording must be deleted or not. When the operator looks for a program which the operator performs an operation of recording by himself/herself on a list of recorded programs, the operator spends much time for selecting programs to be deleted. Even if the operator does not intend to delete a program which the operator performs no operation of recording, when the program is included in a list of recorded programs, the operator may delete the program which another operator performs an operation of recording by mistake.

Therefore, the remote control means N may display on monitor 103A only a program which an operator of a mobile telephone performs an operation of recording on the HDD 8A among programs recorded on the HDD 8A.

In this case, when the recorder 1 receives a command requesting information of the recorded program from the mobile telephone, the recording control means M obtains an operator ID corresponding to the program recorded on the HDD 8A. And the recording control means M adds the operator ID to the information of each recorded program and sends the information to the mobile telephone. When the mobile telephone receives the information of the recorded program to which the operator ID is added, the remote control means N obtains an ID from the IC card 114 and extracts the information of recorded program to which the added ID coincides with the obtained ID from the received information. The remote control means N prepares a list of recorded programs on the basis of only the extracted information of the recorded program and displays the list of the recorded programs on the monitor 103A.

Thus, an operator can easily select a program to be deleted and there is no fear that the operator deletes the program recorded by others in error.

In the case where the remote control means N works as the addition program selecting means 17, if the recorder 1 not only performs notification of the addition program but also sends the information of each recorded program to which the operator ID is added, in a manner similar to the addition program selecting means in the this embodiment, the remote control means N can select a program from added programs on the basis of the operator ID.

The remote control means N may display on the monitor 103A only a program permitted to be deleted in advance among programs recoded on the HDD 8A.

In this case, a user selects a program that the permission to delete is given from a list of recorded programs in advance. When the user selects the program, the remote control means M prepares a command giving a deleting permission of the selected program, and sends the command to the recorder 1. When the recorder 1 receives the command, the recording control means M appends a flag showing that the permission to delete a program is given to the recorded information of the program which the permission to delete is given.

When the mobile telephone receives the recorded information, the remote control means N prepares a list of recorded programs on the basis of only the recorded information to which the flag is appended, and displays the list of the recorded programs on the monitor 103A.

In this case, the operator can also select a program to be deleted easily, there becomes to be no fear that the recorded program is deleted inadvertently.

### Eighth Embodiment

In the foregoing third embodiment, the recording control means M selects a program to be deleted on the basis of the condition that the program is a program of which recording timing is the oldest among the programs which the permission to delete is given. However, the invention is not limited to the above.

For example, the recording control means M may select a program to be deleted on the basis of a condition that the program is a program which is recorded onto a recording medium and is reserved for recording by the same operator and on the basis of a condition that the program is simply a deletable program which the permission to delete is given.

In the eighth embodiment, a program to be deleted is selected on the condition following the deletion level of the program that the operator who performed the recording reservation operation performed an operation of recording.

As shown in FIG. 44, in the recording system in the eighth embodiment, the mobile telephone to which the IC card 110 is removably attached is used as the remote controller 100.

For convenience, it is now assumed that two mobile telephones as the remote controllers 100 are used, the user ID of "0" is stored in the IC card 108 attached to one of the mobile telephones, and the user ID of "1" is stored in the IC card 108 attached to the other mobile telephone.

The deletion level is set by the two users using the mobile telephones or a default value is set by the recorder 1.

The deletion level is basically constructed by the three levels of a deletion-arranged level, a deletable level, and a deletion-inhibited level. The deletion-arranged level is a level at which a recorded program is deleted from a recording medium. The deletable level is a level at which the recording control means M can select a recorded program as a program to be deleted. The deletion inhibited level is a level at which the recording control means M is inhibited from selecting a recorded program as a program to be deleted.

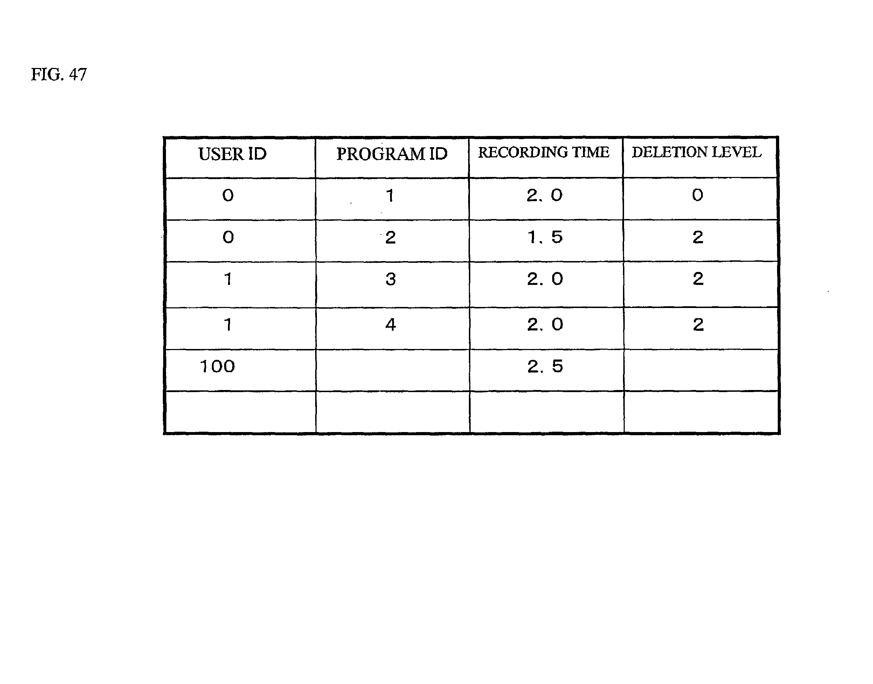

In the eighth embodiment, a recoded program management table is prepared as shown in FIG. 47, for example. In the recorded program management table, each program is associated with the user ID of an operator who recorded the program, recording time of the program, and the deletion level.

The value "0" of the deletion level denotes the deletion arranged level, the value "2" indicates the deletion inhibited level and, although not shown in FIG. 47, the value "1" indicates the deletable level.

The value "100" of the user ID in FIG. 47 indicates that the value of the recording time corresponding to the value "100" is time during which a program can be recorded on a recording medium. In this example, remaining time during which a program can be recorded on a recording medium is 2.5 hours.

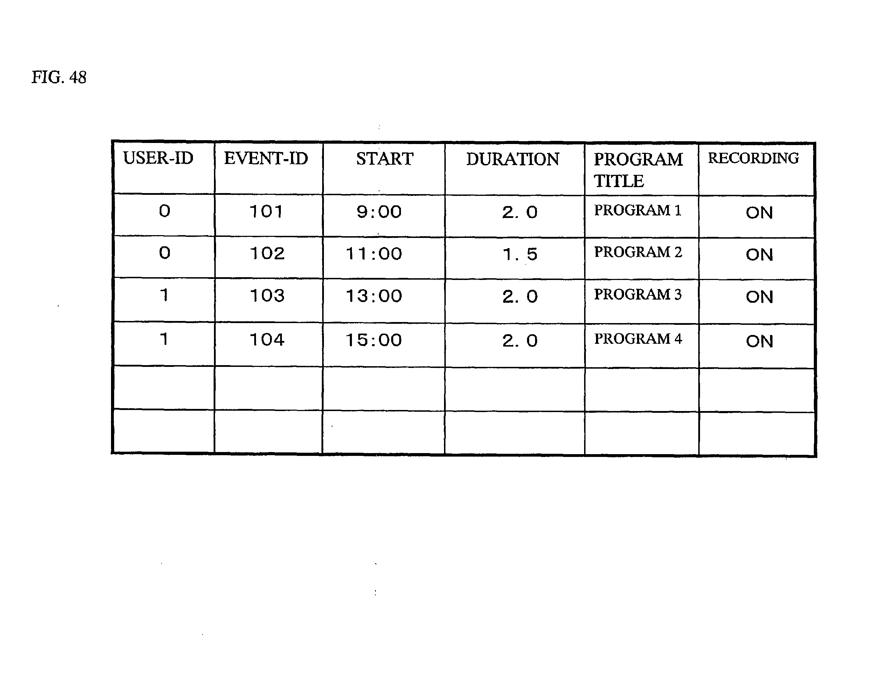

Further, in the management table T, as shown in FIG. 48, each program is associated with the user ID of an operator who performed operation of reserving the program for recording.

The user ID included in the recorded program management table and the management table T is extracted from the IC card 108 when each user performs the recording or recording reservation operation by using his/her mobile telephone, and transmitted from the mobile telephone to the recorder 1.

A procedure taken in the case where the user reserves a program for recording in the recorder 1 by using the mobile telephone (remote controller 100) is as shown in FIG. 25.

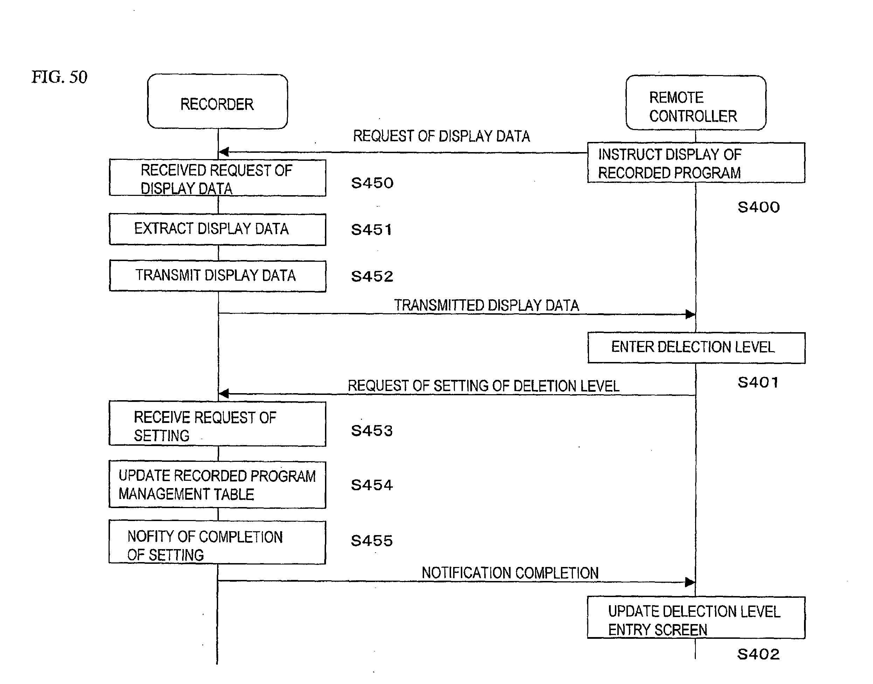

For example, in step 200, when the user adds a program to be reserved for recording by using a mobile telephone to which an IC card storing the user ID of the value "1" is attached as shown in FIG. 50, the mobile telephone transmits a command for requesting recording reservation including parameters which indicate the user ID and the contents of addition to the recorder 1.

When the recorder 1 receives the command, the recording control means M obtains recording time of the program additionally reserved for recording from the parameters included in the command (S300 in FIG. 25). In the example of FIG. 50, the recording time of the program additionally reserved for recording is four hours. The recording control means M obtains recording time corresponding to the user ID of the value "100," that is, the recordable time of the recording medium from the management table T. In the example of FIG. 48, the recordable time is 2.5 hours. The recording control means M determines whether a program recorded on the recording medium is deleted or not on the basis of the recording time of the program additionally reserved for recording and the recordable time (S301 in FIG. 25).

In the example, since the recording time of the program additionally reserved for recording is longer than the recordable time, the recording control means M determines that the program recorded on the recording medium is to be deleted. When the deletion is determined, the recording control means M obtains the user ID from the parameters included in the command and selects the program to be deleted from recorded programs associated with the user ID (S302 in FIG. 25). The recording control means M refers to the recorded program management table for the selection. In the example of FIG. 48, there is no program associated with the user ID of the value "1" and the deletion level of the value "1." In this case, there is no recorded program that can be deleted.

Consequently, the recording control means M refers to the recorded program management table and obtains the recording time of the program associated with the deletion level of the value "0" or "1." If there are a plurality of programs satisfying the condition, the recording time of the programs is totaled. The recording control means M compares an addition value obtained by adding the recording time or the total recording time and the recordable time with the recording time of the program to be reserved for recording, and determines whether the program to be reserved for recording can be recorded or not on the basis of the result of comparison (S303 in Fig. 25).

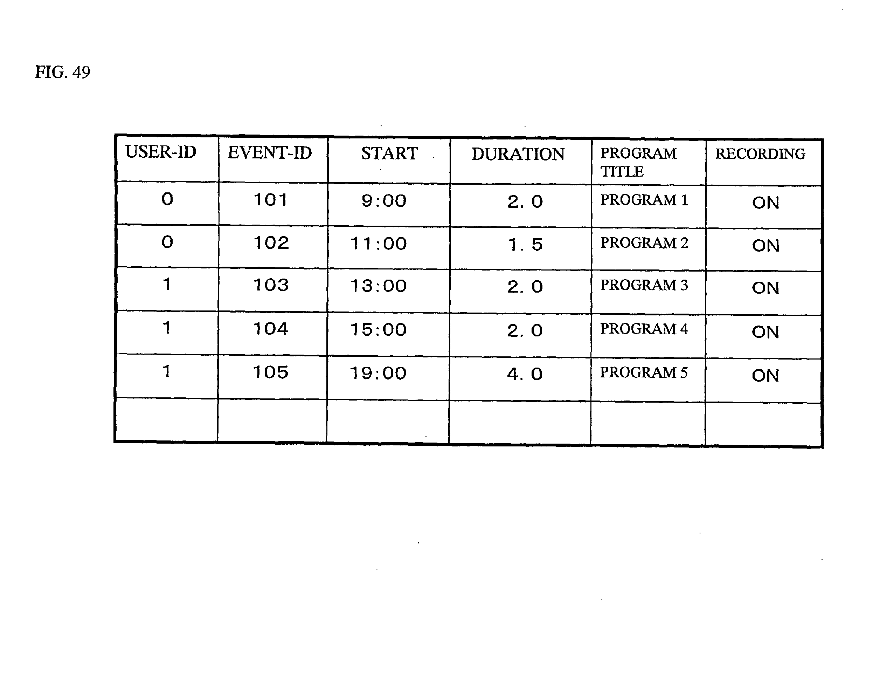

If the addition value is equal to or longer than the recording time of the program to be reserved for recording, it is determined that the program to be reserved for recording can be recorded, and the recording control means M updates the management table T as shown in FIG. 49 (S304 in FIG. 25).

On the other hand, if the addition value is shorter than the recording time of the program to be reserved for recording, the recording control means M notifies the mobile telephone of the fact that the program cannot be reserved for recording.

In the case where the fact that the program cannot be reserved for recording is notified, to record the program that was to be reserved for recording onto the recording medium, the user has to change the setting of the deletion level.

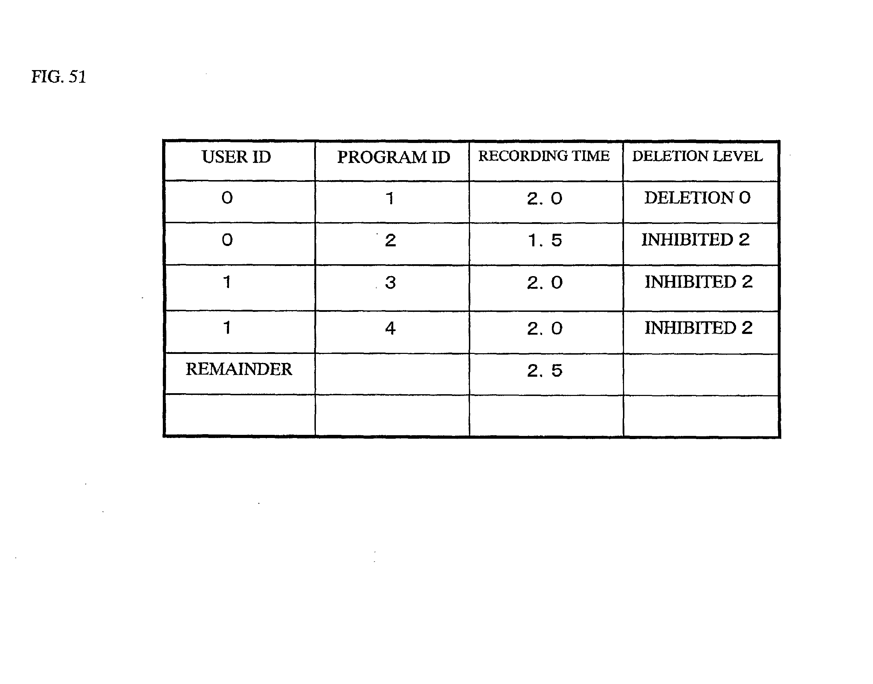

In this case, when the user instructs the mobile telephone to display the contents of the recorded program management table in the recorder 1 (S400 in FIG. 50), the mobile telephone transmits a command including the user ID stored in the IC card 108, which demands the contents of display to the recorder 1. When the command is received by the recorder 1 (S450 in FIG. 50), the recording control means M extracts information of a recorded program in the recorded program management table (S451 in FIG. 50). At this time, the recording control means M may extract only information of a program corresponding to the user ID included in the command. After information is extracted from the recorded program management table, the recorder 1 transmits the information of the extracted recorded program to the mobile telephone (S452 in FIG. 50). When the mobile telephone receives information of the recorded program, a deletion level setting screen as shown in FIG. 51 is displayed on the monitor of the mobile telephone.

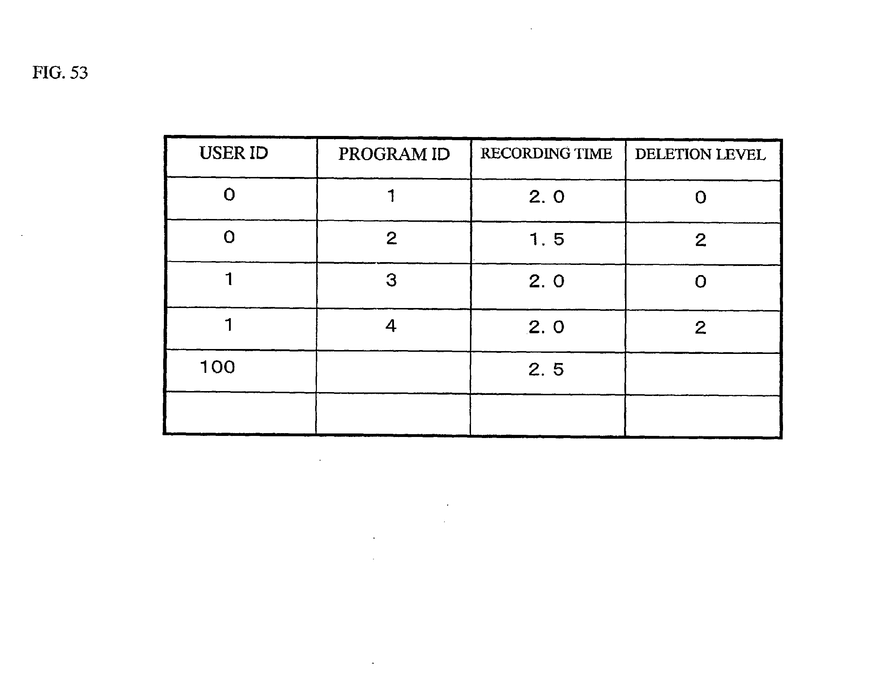

When the user refers to the deletion level setting screen and determines a program to be deleted from programs recorded by himself/herself, the user sends a command to change the value of the deletion level of the program "2" to "0" to the mobile telephone (S401 in FIG. 50). For example, as shown in FIG. 53, it is assumed that the deletion level of the program name "3" is changed to "0" on the deletion level setting screen. When the input contents are determined by the operation of the user, the mobile telephone transmits a command for requesting a setting change in the deletion level, including the parameter indicative of the contents of the change to the recorder 1.

When the recorder 1 receives the command (S453 in FIG. 50), the recording control means M updates the recorded program management table on the basis of the contents of the change indicated by the parameters included in the command (S454 in FIG. 50). After that, the recorder 1 notifies the mobile telephone of completion of the setting (S455 in FIG. 50).

As a result, the deletion level in the recorded program management table is changed as shown in FIG. 53. The value of the deletion level corresponding to the program ID of the value "3" is changed from "2" to "0."

As described above, by setting the deletion level of a program to the deletion arranged level, the total value of the recording time corresponding to the deletion level of the value "0" becomes four hours (2 + 2 = 4), and the addition value obtained by adding the total value and the recordable time becomes 6.5 hours. Since the addition value is longer than the recording time of the program to be reserved for recording, in this state, the recording control means M determines that the program to be reserved for recording can be recorded.

In accordance with the present invention, as described in the above embodiments, the user can confirm a point of difference between the recording reservation information and the information of the broadcasting schedule on the basis of the displayed information shown on the display of the remote controller. Therefore, the user can easily and surely find the change of the broadcasting schedule and update the recording reservation information according to the change.

In the case that the displayed information includes information for displaying a program of which a broadcasting schedule is changed in the state that the program is discriminated from the programs reserved for recording, the user can immediately find the program of which the broadcasting schedule is changed, and there becomes to be no necessity for confirming the recording reservation information for all of the programs reserved for recording.

By the notification of the program selected on the basis of at least one of the recorded program information and recording reservation information from the recorder to the remote controller, without feeling tired, a user can be notified of addition of the program interesting the user.

If the control means of the recording controller automatically reserves for recording or records a program added into the broadcasting schedule, even in a case like that a user does not know the addition of the program because of shortness of the time from the addition of the program to the broadcasting of the program, a failure to watch the program can be avoided.

In this case, if the recorder sends to the remote controller a message that the program added into the broadcasting schedule is reserved for recording or is recorded, the user can confirm the addition of the program and also confirm whether an unnecessary program is recorded or not.

If the recorder shows a result of comparison between recording volume needed for recording a program to be additionally reserved for recording and remaining volume of a recording medium on which the program is to be recorded on the display, the user can determine that the remaining volume is insufficient to record the program according to the displayed result of comparison. When it is determined that the remaining volume is insufficient, the user can delete the recorded program from the recording medium or change a bit-rate of the program to be additionally reserved for recording to obtain the recording volume for recording the program suitably. Thereby, it can be avoided that only a part of the program is recorded or that the recorded program is inadvertently overwritten.

In the case that the update request to the recorder from the remote control means of the remote controller includes personal information specifying a user of the remote controller, by using the personal information included in the update request, the recorder can identify the user of the remote controller, and control the recording and the reproduction on the basis of the result of the identification.

In this case, if the recorder displays a recorded program or a marked image filtered through the personal information, even a recorder capable of reproducing and displaying a program is shared by a plurality of people, a user can easily select a program or a scene to be reproduced and displayed from the programs or in the program with the recording operated by the user.

## Claims

1. A program recording system including a recorder recording a broadcast program, a server device storing information of a broadcasting schedule of broadcast programs and a remote controller for operating the recorder by remote control, comprising:
in the recorder,
recording means for recording a broadcast program;
retaining means for retaining recording reservation information including at least recording start time, and duration or recording end time of a program reserved for recording;
control means for controlling the recording means on the basis of the retained recording reservation information; and
updating means for updating the recording reservation information in a response to an update request from an external device; and,
in the remote controller,
a display;
acquiring means for acquiring the information of the broadcasting schedule from the server device and the recording reservation information from the recorder;
deciding means for deciding displayed information shown on the display on the basis of a point of difference between the acquired recording reservation information and the acquired information of the broadcasting schedule; and
remote control means for requesting to the recorder for updating the recording reservation information.

2. The program recording system according to claim 1, wherein the displayed information includes information for displaying a program of which a broadcasting schedule is changed in a stat that the program is discriminated from the programs reserved for recording.

3. The program recording system according to claim 1, wherein the update request is a request for matching the recording reservation of the program of which the broadcasting schedule is changed with the changed broadcasting schedule.

4. The program recording system according to claim 1, wherein the server device is in the recorder.

5. The program recording system according to claim 1, further comprising in the recorder,
addition program selecting means for selecting a program from programs added into the broadcasting schedule on the basis of at least one of recorded program information regarding a recorded program and the recording reservation information and,
notifying means for notifying the remote controller of the selected program.

6. The program recording system according to claim 1, wherein the control means automatically reserves for recording or records a program added into the broadcasting schedule.

7. The program recording system according to claim 6, wherein the recorder sends to the remote controller a message that the program added into the broadcasting schedule is reserved for recording or is recorded.

8. The program recording system according to claim 1, further comprising
comparing means for comparing recording volume needed for recording a program to be additionally reserved for recording with remaining volume of a recording medium on which the program is to be recorded and for showing the result of comparison on the display, and
deleting instruction means for giving instructions to delete a recorded program, and wherein
the remote control means requests to the recorder for deleting a recorded program.

9. The program recording system according to claim 1, further comprising
comparing means for comparing recording volume needed for recording a program to be additionally reserved for recording with remaining volume of a recording medium on which the program is to be recorded and for showing the result of comparison on the display, and
bit-rate instruction means for giving instructions to a bit rate for recording the program to be additionally reserved for recording, and wherein
the remote control means includes a bit rate for recording a program to be additionally reserved for recording in an update request.

10. The program recording system according to claim 1, wherein the update request includes personal information specifying a user of the remote controller.

11. The program recording system according to claim 10, wherein the recorder displays a recorded program filtered through the personal information.

12. The program recording system according to claim 10, wherein the recorder displays a marked image filtered through the personal information.

13. A remote controller including a display and for operating by remote control a recorder including recording means for recording a broadcast program, retaining means for retaining recording reservation information including at least recording start time, and duration or recording end time of a program reserved for recording, control means for controlling the recording means on the basis of the retained recording reservation information, and updating means for updating the recording reservation information in a response to an update request from an external device, comprising:
acquiring means for acquiring from a server device storing information of a broadcasting schedule of broadcast programs the information of the broadcasting schedule and from the recorder the recording reservation information;
deciding means for deciding displayed information shown on the display on the basis of a point of difference between the acquired recording reservation information and the acquired information of the broadcasting schedule; and
remote control means for requesting to the recorder for updating the recording reservation information.

14. A remote control method for operating by remote control with a remote controller including a display a recorder including recording means for recording a broadcast program, retaining means for retaining recording reservation information including at least recording start time, and duration or recording end time of a program reserved for recording, control means for controlling the recording means on the basis of the retained recording reservation information, and updating means for updating the recording reservation information in a response to an update request from an external device, comprising the steps of:
acquiring from a server device storing information of a broadcasting schedule of broadcast programs the information of the broadcasting schedule and from the recorder the recording reservation information;
deciding displayed information shown on the display on the basis of a point of difference between the acquired recording reservation information and the acquired information of the broadcasting schedule; and
requesting to the recorder for updating the recording reservation information.

15. A program which makes a computer execute a remote control method for operating by remote control with a remote controller including a display a recorder including recording means for recording a broadcast program, retaining means for retaining recording reservation information including at least recording start time, and duration or recording end time of a program reserved for recording, control means for controlling the recording means on the basis of the retained recording reservation information, and updating means for updating the recording reservation information in a response to an update request from an external device, comprising the steps of:
acquiring from a server device storing information of a broadcasting schedule of broadcast programs the information of the broadcasting schedule and from the recorder the recording reservation information;
deciding displayed information shown on the display on the basis of a point of difference between the acquired recording reservation information and the acquired information of the broadcasting schedule; and
requesting to the recorder for updating the recording reservation information.
